# EUROPEAN PATENT APPLICATION

(11) **EP 3 349 476 A1**
(43) Date of publication of application: **18.07.2018**
(21) Application number: 18155847.9
(22) Date of filing: 16.04.2014
(51) Int. Cl.: H04N 21/437, H04N 21/2662, H04N 21/435, H04N 21/6587, H04N 21/2187, H04N 21/2343, H04N 21/262, H04N 21/4402, H04N 21/61, H04N 21/845, H04N 21/858

(54) **INFORMATION PROCESSING DEVICE, CONTENT REQUESTING METHOD, AND COMPUTER PROGRAM**

(30) Priority: 19.04.2013 JP 2013088875
(62) Divisional of application: 14784676.0
(71) Applicant: Sony Corporation, Tokyo, 108-0075 (JP)
(72) Inventor: YAMAGISHI, Yasuaki, Minato-ku, Tokyo 108-0075 (JP); IGARASHI, Tatsuya, Minato-ku, Tokyo 108-0075 (JP); HIRABAYASHI, Mitsuhiro, Minato-ku, Tokyo 108-0075 (JP)
(74) Representative: D Young & Co LLP

(57) **Abstract**

[Object] To provide an information processing device in which maintenance is enabled by avoiding an increase in an amount of the meta information when a device is remotely controlled by a client using the ABS technique.

[Solution] Provided is an information processing device including: a storage unit configured to store a predetermined definition for adding a parameter to access information for accessing each of a plurality of subsegments constituting each piece of encoded data obtained by encoding same content at a different bit rate, or for accessing every element to be acquired through a request to a server described in an MPD; and a communication unit configured to access an address defined in the access information by designating a parameter based on the predetermined definition stored in the storage unit. The address defined in the access information is an address for controlling a device which images the content.

## Description

### Technical Field

The present disclosure relates to an information processing device, a content requesting method, and a computer program.

### Background Art

In recent years, there are widely used the hypertext transfer protocol (HTTP) for transferring contents and the MP4 related to content compression encoding. The HTTP enables not only downloading of contents but also streaming thereof on the Internet. The HTTP streaming is also adopted in network media standards such as "DLNA guidelines" (2006) and "Open IPTV Forum" (2009). Moreover, the MP4 (ISO/IEC-14496-12, 14) can be used not only as a storage format but also as a transmission format for downloading and streaming, for example.

Regarding the streaming, the adaptive bit rate streaming (ABS) technique is known, as described in Non-Patent Literature below. The ABS technique is a technique in which a plurality of pieces of encoded data having the same content expressed at different bit rates are stored in a content server so that a client selects any piece of encoded data among the plurality of pieces of encoded data in accordance with a network band and reproduces the encoded data.

In the case of normal streaming, when a network band becomes below a bit rate, the data supply becomes incapable of catching up with the consumption, and the buffering data on the client side is depleted. As a result, the client cannot continue reproduction. By contrast, in the ABS technique, the reproduction data is switched to encoded data of a low bit rate when a band becomes narrow. Thus, it is possible to suppress breaks during reproduction.

In the field of this ABS technique, a technology of remotely controlling a network camera from a client side has been proposed as in Non-Patent Literature 2 described below. In addition, in regard to the field of the ABS technique, a technology for executing redirection of appropriately changing a server serving as a distribution destination while a parameter is added on a server side and the parameter is stored by a client has also been proposed as described in Non-Patent Literature 3.

### Citation List

### Non-Patent Literature

Non-Patent Literature 1: MPEG-DASH (Dynamic Adaptive Streaming over HTTP) (URL: http://mpeg.chiariglione.org/standards/mpeg-dash/media-presentation-description-and-segment-formats/text-isoiec-23009-12012-dam-1)
Non-Patent Literature 2: m28017 DASH: Device/Server Specific Representation in MPD (CE-URLPARAM), MPEG#103, Geneva, 2013
Non-Patent Literature 3: m28354 Core Experiment on Parameters Insertion in Media Segment URL, MPEG#103, Geneva, 2013

### Summary of Invention

### Technical Problem

When the ABS technique is used in an application in which a client remotely controls a device as in the remote control of the network camera, the amount of information described in meta information becomes greater as the control becomes more detailed. When the amount of information described in the meta information becomes greater, maintainability thereof deteriorates accordingly.

Therefore, the present disclosure provides a novel and improved information processing device, content requesting method, and computer program in which maintenance is enabled by avoiding an increase in an amount of the meta information when a device is remotely controlled by a client using the ABS technique.

### Solution to Problem

According to the present disclosure, there is provided an information processing device including: a storage unit configured to store a predetermined definition for adding a parameter to access information for accessing each of a plurality of subsegments constituting each piece of encoded data obtained by encoding same content at a different bit rate, or for accessing every element to be acquired through a request to a server described in an MPD; and a communication unit configured to access an address defined in the access information by designating a parameter based on the predetermined definition stored in the storage unit. The address defined in the access information is an address for controlling a device which images the content.

According to the present disclosure, there is provided a content requesting method including: storing a predetermined definition for adding a parameter to access information for accessing each of a plurality of subsegments constituting each piece of encoded data obtained by encoding same content at a different bit rate, or for accessing every element to be acquired through a request to a server described in an MPD; and designating a parameter based on the predetermined definition stored in the storage unit and accessing an address defined in the access information. The address defined in the access information is an address for controlling a device which images the content.

According to the present disclosure, there is provided a computer program causing a computer to execute: storing a predetermined definition for adding a parameter to access information for accessing each of a plurality of subsegments constituting each piece of encoded data obtained by encoding same content at a different bit rate, or for accessing every element to be acquired through a request to a server described in an MPD; and designating a parameter based on the predetermined definition stored in the storage unit and accessing an address defined in the access information. The address defined in the access information is an address for controlling a device which images the content.

### Advantageous Effects of Invention

According to the present disclosure described above, a novel and improved information processing device, content requesting method, and computer program in which maintenance is enabled by avoiding an increase in an amount of the meta information when a device is remotely controlled by a client using the ABS technique can be provided.

### Brief Description of Drawings

FIG. 1 is a descriptive diagram illustrating a configuration of a content reproduction system according to an embodiment of the present disclosure.
FIG. 2 is a descriptive diagram illustrating a data flow in a content reproduction system according to the present embodiment.
FIG. 3 is a descriptive diagram illustrating a concrete example of an MPD.
FIG. 4 is a functional block diagram illustrating a configuration of a content server 10 according to the present embodiment.
FIG. 5 is a functional block diagram illustrating a configuration of a content reproduction device 20 according to the present embodiment.
FIG. 6 is a functional block diagram illustrating a configuration of a content server 13 according to the present embodiment.
FIG. 7 is a descriptive diagram showing the content of a parameter description.
FIG. 8 is a descriptive diagram showing the content of a parameter description.
FIG. 9 is a descriptive diagram showing an example of an MPD that refers to the parameter description.
FIG. 10A is a sequence diagram showing an operation example of the content reproduction system according to the embodiment of the present disclosure.
FIG. 10B is a sequence diagram showing the operation example of the content reproduction system according to the embodiment of the present disclosure.
FIG. 11 is a block diagram illustrating an example of a hardware configuration of a computer.
FIG. 12 is a diagram illustrating an example of a multi-view image encoding scheme.
FIG. 13 is a diagram illustrating an example of a configuration of a multi-view image encoding device to which the present disclosure is applied.
FIG. 14 is a diagram illustrating an example of a configuration of a multi-view image decoding device to which the present disclosure is applied.
FIG. 15 is a diagram illustrating an example of a hierarchical image encoding scheme.
FIG. 16 is a diagram for describing an example of spatial scalable encoding.
FIG. 17 is a diagram for describing an example of temporal scalable encoding.
FIG. 18 is a diagram for describing an example of scalable encoding of a signal-to-noise ratio.
FIG. 19 is a diagram illustrating an example of a configuration of a hierarchical image encoding device to which the present disclosure is applied.
FIG. 20 is a diagram illustrating an example of a configuration of a hierarchical image decoding device to which the present disclosure is applied.
FIG. 21 is a diagram illustrating an example of a schematic configuration of a television device to which the present disclosure is applied.
FIG. 22 is a diagram illustrating an example of a schematic configuration of a mobile telephone to which the present disclosure is applied.
FIG. 23 is a diagram illustrating an example of a schematic configuration of a recording and reproduction device to which the present disclosure is applied.
FIG. 24 is a diagram illustrating an example of a schematic configuration of an imaging device to which the present disclosure is applied.
FIG. 25 is a block diagram illustrating an example of use of scalable encoding.
FIG. 26 is a block diagram illustrating another example of use of scalable encoding.
FIG. 27 is a block diagram illustrating still another example of use of scalable encoding.
FIG. 28 illustrates an example of a schematic configuration of a video set to which the present disclosure is applied.
FIG. 29 illustrates an example of a schematic configuration of a video processor to which the present disclosure is applied.

### Description of Embodiments

Hereinafter, preferred embodiments of the present disclosure will be described in detail with reference to the appended drawings. Note that, in this specification and the drawings, elements that have substantially the same function and structure are denoted with the same reference signs, and repeated explanation is omitted.

Moreover, in this specification and the drawings, a plurality of elements that have substantially the same function and structure may be distinguished by providing different alphabets after the same reference signs. For example, a plurality of elements that have substantially the same function and structure or logical significance are distinguished as content reproduction devices 20A, 20B, and 20C, if necessary. However, when it is unnecessary to distinguish each of a plurality of elements that have substantially the same function and structure, only the same reference sign is provided. For example, when it is unnecessary to particularly distinguish the content reproduction devices 20A, 20B, and 20C, the content reproduction devices are simply referred to as content reproduction devices 20.

Moreover, the present disclosure will be described following the item order described below.
<1. Overview of content reproduction system>
<2. Configuration of content server 10>
<3. Configuration of content reproduction device 20>
<4. Configuration of content server 13>
<5. Configuration of MPD>
<6. Conclusion>

### <1. Overview of content reproduction system>

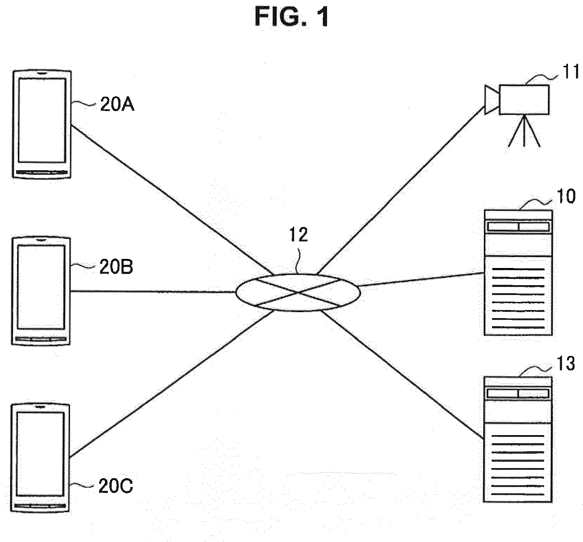

First, a content reproduction system according to an embodiment of the present disclosure will be schematically described with reference to FIG. 1 to FIG. 3.

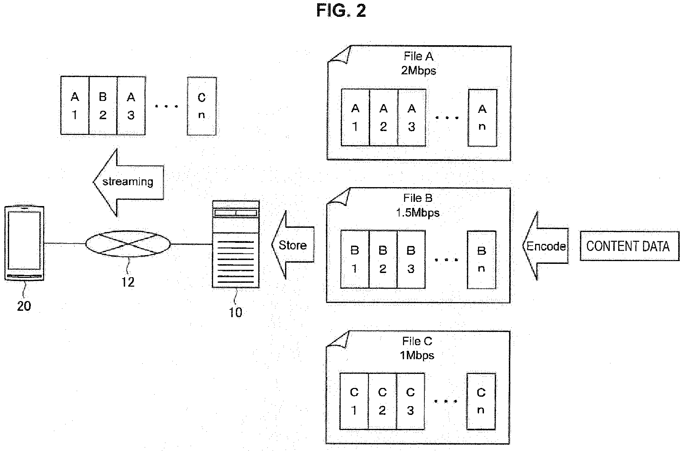

In the following, the basic configuration that is common in each embodiment will be first described with reference to FIG. 1 and FIG. 2.

FIG. 1 is a descriptive diagram illustrating a configuration of a content reproduction system according to an embodiment of the present disclosure. As illustrated in FIG. 1, the content reproduction system according to the embodiment of the present disclosure includes content servers 10 and 13, a network camera 11, a network 12, and content reproduction devices 20 (client devices).

The content server 10 and the content reproduction devices 20 are connected through the network 12. The network 12 is a wired or wireless transmission path of information transmitted from a device connected to the network 12.

For example, the network 12 may include public networks such as the Internet, a telephone network, and a satellite communication network, various kinds of local area networks (LAN) including Ethernet (registered trademark), and a wide area network (WAN), for example. Moreover, the network 12 may include a dedicated network such as the Internet protocol-virtual private network (IP-VPN).

The content server 10 encodes content data, and generates and stores a data file including encoded data and meta information of the encoded data. Note that, when the content server 10 generates an MP4-format data file, the encoded data corresponds to "mdat", and the meta information corresponds to "moov".

Moreover, the content data may be music data such as music, lectures, and radio programs, image data such as movies, television programs, video programs, pictures, documents, drawings, diagrams, games, and software, for example. In addition, the content data may be a video captured by the network camera 11. The content server 10 can control the network camera 11 according to a request from the content reproduction device 20.

Here, the content server 10 according to the present embodiment generates a plurality of data files of different bit rates regarding the same contents. In addition, the content server 13 according to the present embodiment transmits information of the URL of the content server 10 including information of a parameter to be added to the URL by the content reproduction devices 20 to the content reproduction devices 20 in response to a request to reproduce content from the content reproduction device 20. In the following, this matter will be described concretely with reference to FIG. 2.

FIG. 2 is a descriptive diagram illustrating a data flow in the content reproduction system according to the present embodiment. The content server 10 encodes the same content data at different bit rates, and generates a file A of 2 Mbps, a file B of 1.5 Mbps, and a file C of 1Mbps, for example, as illustrated in FIG. 2. Relatively, the file A is of a high bit rate, the file B is of a standard bit rate, and the file C is of a low bit rate.

Moreover, as illustrated in FIG. 2, the encoded data of each file is divided into a plurality of segments. For example, the encoded data of the file A is divided into segments "A1," "A2," "A3," ......, and "An." The encoded data of the file B is divided into segments "B1," "B2," "B3," ......, and "Bn." The encoded data of the file C is divided into segments "C1," "C2," "C3," ......, and "Cn."

Note that each segment may be constituted by configuration samples of one or two or more pieces of video encoded data and sound encoded data that begin with an MP4 sync sample (IDR-picture in AVC/H.264 video encoding) and can be reproduced independently. For example, when video data of 30 frames per second is encoded in a group of picture (GOP) with a 15-frame fixed length, each segment may be two-second video and sound encoded data corresponding to 4 GOP or 10-second video and sound encoded data corresponding to 20 GOP.

Moreover, a reproduction range (range of a time position from the head of contents) by a segment with the same arrangement order in each file is the same. For example, the reproduction ranges of the segment "A2," the segment "B2," and the segment "C2" are the same, and when each segment is two-second encoded data, the reproduction range of any of the segment "A2," the segment "B2," and the segment "C2" is two seconds to four seconds of contents.

The content server 10 generates the file A to the file C constituted by such a plurality of segments, and stores the file A to the file C. Then, the content server 10 sequentially transmits the segments constituting different files to the content reproduction device 20, as illustrated in FIG. 2, and the content reproduction device 20 streaming-reproduces the received segments.

Here, the content server 10 according to the present embodiment transmits a play list file (hereinafter, referred to as a media presentation description (MPD) including bit rate information and access information of each encoded data to the content reproduction device 20. Based on the MPD, the content reproduction device 20 selects any bit rate among a plurality of bit rates, and requests the content server 10 to transmit a segment corresponding to the selected bit rate.

Although only one content server 10 is illustrated in FIG. 1, it is needless to say that the present disclosure is not limited thereto.

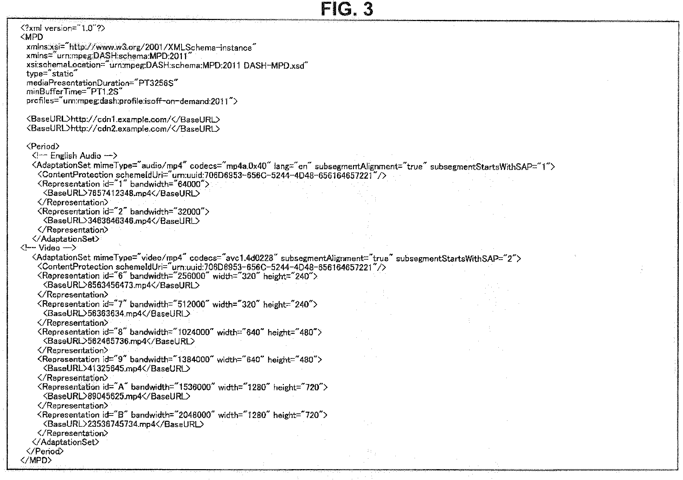

FIG. 3 is a descriptive diagram illustrating a concrete example of the MPD. As illustrated in FIG. 3, the MPD includes access information related to a plurality of encoded data having different bit rates (bandwidth). For example, the MPD illustrated in FIG. 3 indicates the presence of encoded data of 256 Kbps, 1.024 Mbps, 1.384 Mbps, 1.536 Mbps, and 2.048 Mbps, and includes access information related to each encoded data. The content reproduction device 20 can dynamically change a bit rate of encoded data to be streaming-reproduced based on such an MPD.

Note that, although FIG. 1 illustrates a mobile terminal as an example of the content reproduction device 20, the content reproduction device 20 is not limited to such an example. For example, the content reproduction device 20 may be an information processing device such as a personal computer (PC), a home image processor (DVD recorder, video deck, etc.), a personal digital assistant (PDA), a home game machine, and a household electrical appliance. Moreover, the content reproduction device 20 may be an information processing device such as a cellular phone, a personal handyphone system (PHS), a portable music reproduction device, a portable image processor, and a portable game machine.

### <2. Configuration of content server 10>

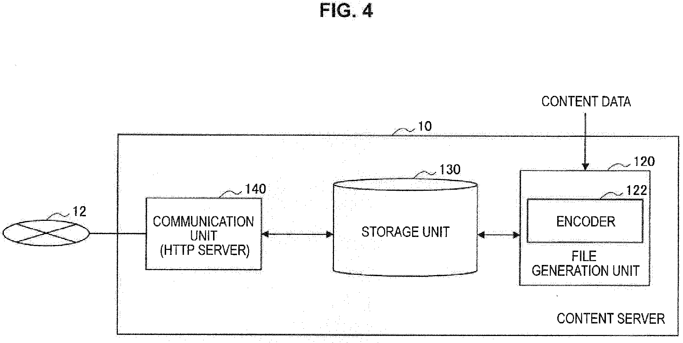

In the above, the overview of the content reproduction system according to the embodiment of the present disclosure has been described with reference to FIG. 1 to FIG. 3. Subsequently, the configuration of the content server 10 according to the present embodiment will be described with reference to FIG. 4.

FIG. 4 is a functional block diagram illustrating a configuration of the content server 10 according to the present embodiment. As illustrated in FIG. 4, the content server 10 according to the present embodiment includes a file generation unit 120, a storage unit 130, and a communication unit 140.

The file generation unit 120 includes an encoder 122 that encodes content data, and generates a plurality of pieces of encoded data having the same contents at difference bit rates and the above-described MPD. For example, when the encoded data of 256 Kbps, 1.024 Mbps, 1.384 Mbps, 1.536 Mbps, and 2.048Mbps are generated, the file generation unit 120 generates the MPD illustrated in FIG. 3.

The storage unit 130 stores a plurality of encoded data of different bit rates and the MPD that are generated by the file generation unit 120. The storage unit 130 may be a storage medium such as a nonvolatile memory, a magnetic disk, an optical disc, and a magneto-optical (MO) disc. The nonvolatile memory is exemplified by an electrically erasable programmable read-only memory (EEPROM) and an erasable programmable read-only memory (EPROM), for example. Moreover, the magnetic disk is exemplified by a hard disk and a disc-shaped magnetic body disk, for example. Moreover, the optical disc is exemplified by a compact disc (CD), a digital versatile disc recordable (DVD-R), and a Blu-ray disc (BD) (registered trademark), for example.

The communication unit 140 is an interface with the content reproduction device 20, and performs communication with the content reproduction device 20 through the network 12. To be more specific, the communication unit 140 has a function as an HTTP server that performs communication with the content reproduction device 20 in accordance with the HTTP. For example, the communication unit 140 transmits an MPD to the content reproduction device 20, extracts, from the storage unit 130, encoded data requested based on the MPD by the content reproduction device 20, in accordance with the HTTP, and transmits the encoded data to the content reproduction device 20 as an HTTP response.

### <3. Configuration of content reproduction device 20>

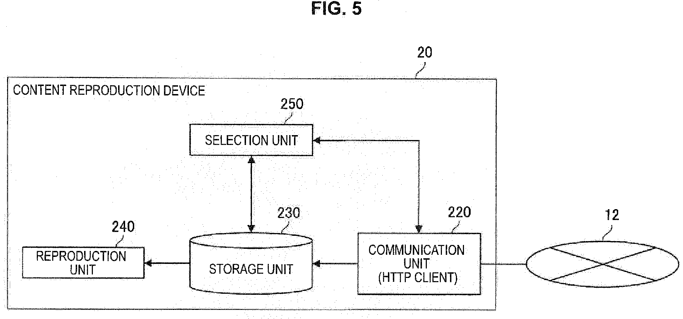

In the above, the configuration of the content server 10 according to the present embodiment has been described. Subsequently, the configuration of the content reproduction device 20 according to the present embodiment will be described with reference to FIG. 5.

FIG. 5 is a functional block diagram illustrating a configuration of the content reproduction device 20 according to the present embodiment. As illustrated in FIG. 5, the content reproduction device 20 according to the present embodiment includes a communication unit 220, a storage unit 230, a reproduction unit 240, and a selection unit 250.

The communication unit 220 (communication unit) is an interface with the content server 10, and requests data from the content server 10 and acquires data from the content server 10. To be more specific, the communication unit 220 has a function as an HTTP client that performs communication with the content reproduction device 20 in accordance with the HTTP. For example, the communication unit 220 uses an HTTP range and thus can selectively acquire an MPD or a segment of encoded data from the content server 10.

The storage unit 230 stores various types of information regarding reproduction of content. For example, the storage unit 230 sequentially buffers segments acquired by the communication unit 220 from the content server 10. The segments of the encoded data buffered by the storage unit 230 are sequentially supplied to the reproduction unit 240 in a first-in first-out (FIFO) manner.

In addition, the storage unit 230 retains definition information for acquiring a video captured by the network camera 11 by instructing the network camera 11 with a direction or a magnification. The definition information retained by the storage unit 230 will be described below in detail.

The reproduction unit 240 sequentially reproduces the segments supplied from the storage unit 230. Concretely, the reproduction unit 240 performs decoding, D-A conversion, and rendering of the segments, for example.

The selection unit 250 sequentially selects, in the same contents, segments of encoded data corresponding to certain bit rates included in the MPD that are to be acquired. For example, when the selection unit 250 sequentially selects segments "A1," "B2," and "A3" in accordance with a band of the network 12, the communication unit 220 sequentially acquires the segments "A1," "B2," and "A3" from the content server 10, as illustrated in FIG. 2.

The content reproduction device 20 according to the present embodiment controls the network camera 11 to acquire the video captured by the network camera 11 from the designated direction or with the designated magnification from the content server 10. Then, the content reproduction device 20 uses the ABS technique disclosed in Non-Patent Literature 1 in control of the network camera 11.

### <4. Configuration of content server 13>

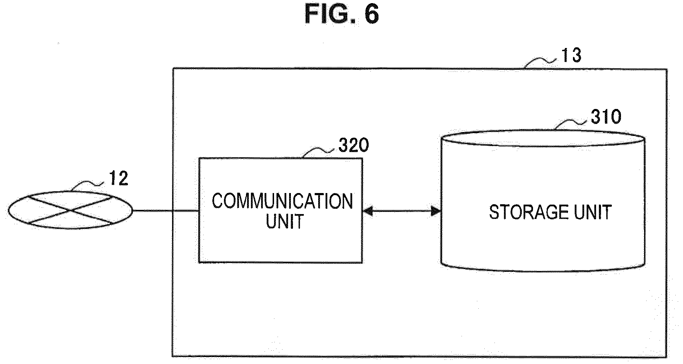

FIG. 6 is a descriptive diagram illustrating an example of a configuration of a content server 13. As illustrated in FIG. 6, the content server 13 according to the present embodiment has a storage unit 310 and a communication unit 320.

The storage unit 310 stores information of the URL of an MPD. The information of the URL of the MPD is transmitted from the content server 13 to the content reproduction device 20 in response to a request from the content reproduction device 20 to reproduce content. In addition, when providing the information of the URL of the MPD to the content reproduction device 20, the storage unit 310 stores definition information for adding a parameter to the URL described in the MPD by the content reproduction device 20.

The communication unit 320 is an interface with the content reproduction device 20 to communicate with the content reproduction device 20 via the network 12. That is to say, the communication unit 320 receives a request for information of the URL of an MPD from the content reproduction device 20 which requests reproduction of content, and transmits the information of the URL of the MPD to the content reproduction device 20. The URL of the MPD transmitted from the communication unit 320 includes the information for adding the parameter by the content reproduction device 20.

A parameter to be added to the URL of the MPD by the content reproduction device 20 can be variously set with the definition information shared by the content server 13 and the content reproduction device 20. As an example, information such as a current position of the content reproduction device 20, the user ID of a user who uses the content reproduction device 20, a memory size of the content reproduction device 20, the capacity of a storage of the content reproduction device 20, and the like can be added to the URL of the MPD by the content reproduction device 20.

### <4. Configuration of MPD>

Next, a configuration of an MPD according to the present embodiment will be described. Non-Patent Literature 2 described above has proposed a method of designating a pan angle attribute "pan_range," a tilt angle attribute "tilt_range," and a zoom magnification attribute "zoom_range" in an element "SegmentTemplate," content of which is disclosed in Section 5.3.9.4.2 of Non-Patent Literature 1 described above, in order to control a network camera from a client.

When such parameters are designated in an MPD as above, however, the amount of content of the MPD becomes greater as control of the network camera becomes more detailed. When the amount of information described in the MPD becomes greater, maintainability of the MPD deteriorates accordingly

Thus, in the present embodiment, instead of adding the attributes "pan_range," "tilt_range," "zoom_range" to the element "SegmentTemplate," content of which is disclosed in Section 5.3.9.4.2 of Non-Patent Literature 1 described above, only an attribute "pd" is added. The attribute "pd" is an attribute for designating one or more URIs of definition information for controlling the network camera 11. The definition information designated by the attribute "pd" of the element "SegmentTemplate" is also referred to as a parameter description. The parameter description can be described in, for example, Web Application Description Language (WADL, http://www.w3.org/Submission/wadl/), Web Service Description Language (WSDL, http://www.ibm.com/developerworks/webservices/library/ws-restwsdl/), or another web API description language. The definition information can be stored in the storage unit 310 or the storage unit 230. When the parameter description is stored in both the storage unit 310 and the storage unit 230, it should be assumed that the content of the storage units is synchronized, i.e., the content of both storage units is maintained to be the same.

An example in which the URL for acquiring a video captured by the network camera 11 is described as "http://cdn1.example.com/camera1/" in an MPD, is designated as "schemeIdUri='urn:PanAngleDef"' in the element "EssentialProperty" of the tag <AdaptationSEt> of the MPD, and is designated as "urn:PanAngleDef' as a parameter description in the attribute "pd" of the element "SegmentTemplate" will be described below.

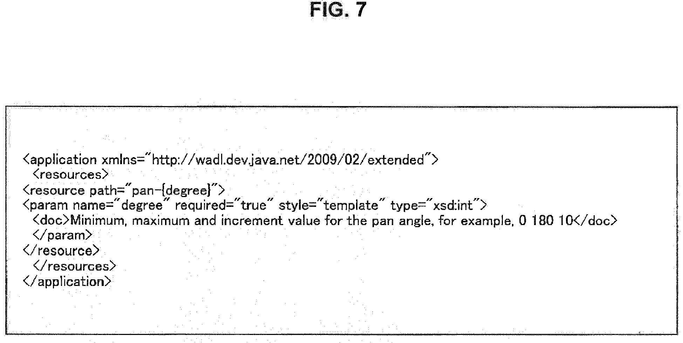

FIG. 7 is a descriptive diagram showing the content of "urn:PanAngleDef' that is the parameter description mentioned above. This parameter description is definition information for designating a pan angle of the network camera 11.

The tag <resource> is a tag for designating a position of a video captured by the network camera 11, and the position is described in the element "path." It is described as "pan-{degree}" in the example of FIG. 6. By setting a value to the "degree" and making a request to the content server 10, the content reproduction device 20 can designate a pan angle of the network camera 11.

In the portion enclosed by the tag <param>, the content of the definition of a parameter description is described.

The element "name" gives the title of a parameter for controlling the network camera 11 from the content reproduction device 20. In the element "name" of the example of FIG. 7, a parameter "degree" for designating a pan angle of the network camera 11 is designated.

The element "required" stipulates whether or not a description of the query parameter is necessary in the content reproduction device 20. In the example of FIG. 7, "true" is designated in the element "required," indicating that the description of this parameter is necessary.

The element "style" gives the form of a parameter to be added to the URL of the MPD by the content reproduction device 20. The form of a parameter includes a query parameter, a template, and the like. In the example shown in FIG. 7, "template" is designated in the element "style," indicating that the parameter is described by the content reproduction device 20 in the form of a template.

In the portion enclosed by the tag <doc>, information regarding the parameter description is described. The parameter description of FIG. 7 is details regarding the parameter "degree," indicating designation of a maximum value, a minimum value, and an increment value of the pan angle.

The content reproduction device 20 adds a parameter based on the content shown in FIG. 7. For example, when requesting a video captured from a direction from which a pan angle is 40 degrees, the content reproduction device 20 designates the URL to be "http://cdn1.example.com/camera1/pan-40" and accesses the URL from the communication unit 220. The content server 10 can designate the pan angle of the network camera 11 to be 40 degrees based on the request from the content reproduction device 20, and transmit the video captured by the network camera 11 to the content reproduction device 20.

Another example will be introduced. An example in which the URL for acquiring a video captured by the network camera 11 is described as "http://cdn1.example.com/camera1/" in an MPD is designated as "schemeIdUri='urn:ZoomScaleDef"' in the element "EssentialProperty" of the tag <AdaptationSet> of the MPD, and is designated as "urn:ZoomScaleDef' as a parameter description in the attribute "pd" of the element "SegmentTemplate" will be described below.

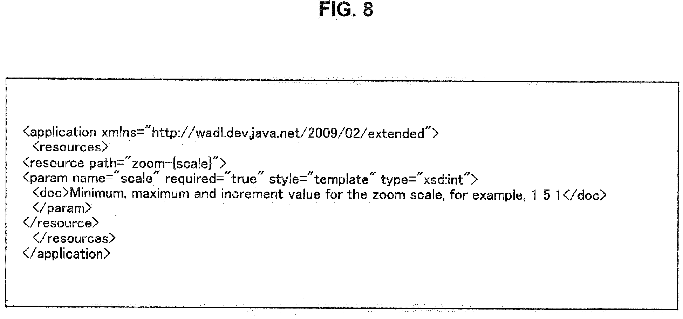

FIG. 8 is a descriptive diagram showing the content of "urn:ZoomScaleDef' that is the parameter description mentioned above. This parameter description is definition information for designating a zoom magnification of the network camera 11.

For example, when requesting a video with a zoom magnification of 3 times, the content reproduction device 20 designates the URL as "http://cdn1.example.com/camera1/zoom-3" and accesses the URL from the communication unit 220. The content server 10 can designate the zoom magnification of the network camera 11 as 3 times based on the request from the content reproduction device 20, and transmit the video captured by the network camera 11 to the content reproduction device 20.

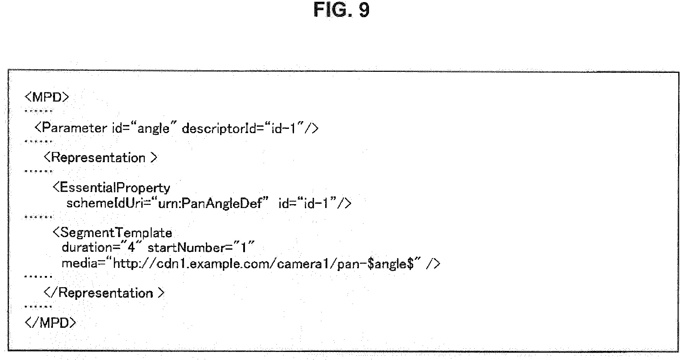

FIG. 9 is a descriptive diagram showing an example of an MPD configured to refer to the parameter description described above. Non-Patent Literature 3 described above proposes introducing an element "parameter," designating the name of a parameter to be used as a template ("angle" in the example of FIG. 9) for the id attribute of the element "parameter," and referring to "EssentialProperty" (an element which designates a descriptor to be supported in the target MPD) for the attribute "descriptorld." However, Non-Patent Literature 2 does not propose the next definition.

Here, the next definition using the above-described parameter description is the MPD shown in FIG. 9. "urn:PanAngleDef' designated in the element "schemeIdUri" is the parameter description shown in FIG. 7. By defining the MPD as described above, the content reproduction device 20 can access the address "http://cdn1.example.com/camera1/pan-40," and acquire content. By using a standard description scheme in a parameter description, the existing standard framework can be used, and thus addition of a function such as URL signing becomes easy.

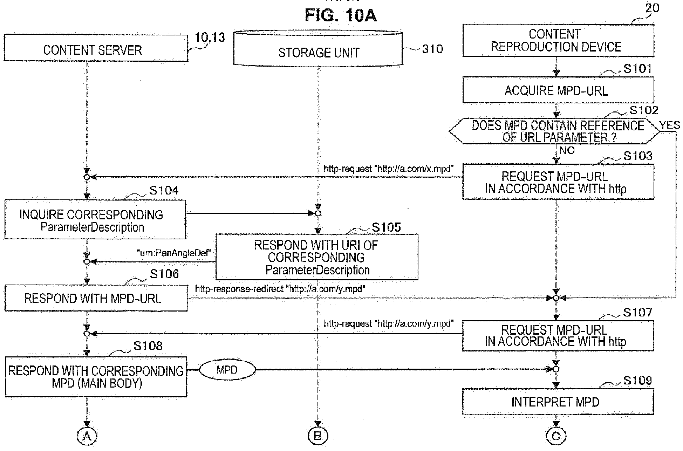

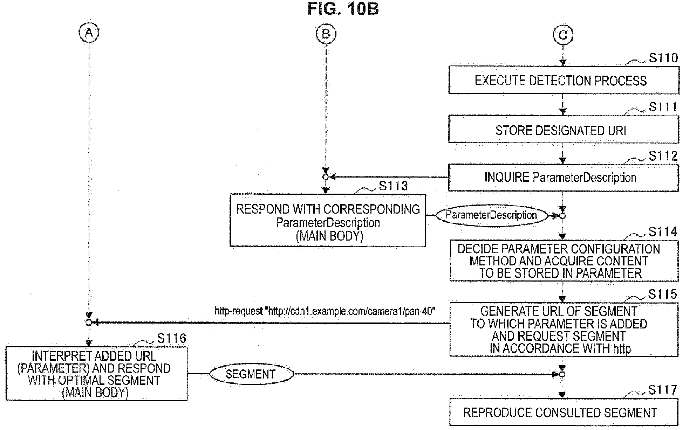

The series of processes described above will be described in more detail. FIGS. 10A and 10B are sequence diagrams showing the above-described series of processes in detail. The sequence diagrams in FIGS. 10A and 10B show an operation in which information of the URL of an MPD is transmitted from the content server 13 to the content reproduction device 20 and the content reproduction device 20 acquires content from the network camera 11 based on the URL of the MPD to reproduce the video captured by the network camera 11.

When the content reproduction device 20 attempts to reproduce the content using the reproduction unit 240, the content reproduction device 20 first acquires the URL of the MPD from the content server 11 (Step S101). The acquisition of Step S101 is executed by, for example, the reproduction unit 240 through the communication unit 220. After acquiring the URL of the MPD from the content server 13, the content reproduction device 20 determines whether or not it is an MPD which contains reference of a URL parameter (Step S102). This determination of Step S102 can be executed by the reproduction unit 240. An MPD which contains reference of a URL parameter refers to an MPD which includes a parameter, for example, "urn:PanAngleDef' shown in FIG. 9.

When it is determined in Step S102 that the URL of the MPD acquired in Step S101 is not an MPD which contains the reference of the URL parameter, the content reproduction device 20 requests the URL of the MPD in accordance with the http from the content server 13 (Step S103). The request of Step S103 is executed by, for example, the reproduction unit 240 using the communication unit 220. When the content reproduction device 20 acquires only the URL "http://a.com/x.mpd" in the above-described example, for example, the content reproduction device 20 requests "http://a.com/x.mpd" from the content server 13 in the form of an http-request.

The content server 13 that has received the request for the URL of the MPD from the content reproduction device 20 decides state information that the server desires to acquire from the content reproduction device 20, for example, angle information of the network camera 11 in the above-described example, and inquires a corresponding parameter description using the storage unit 310 (Step S104). The storage unit 310 responds with the URI of the corresponding parameter description (Step S105). Applying this process to the above-described example, the storage unit 310 replieswith the URI "urn: PanAngleDef' according to the inquiry from the content server 10.

The content server 10 which has received the response from the storage unit 310 accommodates the URI (urn:PanAngleDef) of the parameter description in the MPD. In addition, the content server 10 updates the MPD by adding the attribute "pd" of the element "SgmentTemplate" (for example, it is assumed to be y.mpd), and responds to the content reproduction device 20 with the URL (http://a.com/y.mpd) of an MPD indicating the updated MPD in accordance with http-response-redirect (Step S106).

The content reproduction device 20 which has received the response from the content server 13 requests the URL of the updated MPD from the content server 10 in accordance with the http (Step S107). According to the example described above, the content reproduction device 20 requests the URL of the MPD "http://a.com/y.mpd" from the content server 10 in the form of an http-request.

The content server 10 that has received the request from the content reproduction device 20 responds to the content reproduction device 20 with the main body of the MPD (Step S108).

When the main body of the MPD is transferred from the content server 10 (or it is found through the determination of Step S102 that it is the MPD which contains reference of a URL parameter acquired in Step S101), the content reproduction device 20 to which the main body of the MPD has been transferred from the content server 10 interprets the transferred MPD (Step S109). The interpretation of the MPD of Step S109 can be executed by, for example, the reproduction unit 240. The content reproduction device 20 interprets the MPD transmitted from the content server 10 and decides "AdaptationSet" or "Representation/SubRepresentation" as a reproduction target.

When "AdaptationSet" or "Representation/SubRepresentation" is decided as a reproduction target through the interpretation of the MPD, the content reproduction device 20 executes a detection process with respect to the reproduction target (Step S110). The detection process of Step S110 is executed by, for example, the reproduction unit 240. Specifically, the content reproduction device 20 detects whether "AdaptationSet" or "Representation/SubRepresentation" has "EssentialProperty," whether "EssentialProperty" is designated with the value of the attribute "schemeIdUri" (for example, urn: PanAngleDef), and whether interpretation of the parameter description to be referred to for the URI designated in the attribute "schemeIdUri" is necessary for a reproduction process. In addition, the content reproduction device 20 detects whether the URI has become a URI signifying insertion of the URL parameter.

When executing the detection process on a reproduction target, the content reproduction device 20 then stores the URI (Step Sill). Specifically, the content reproduction device 20 stores the URI (urn:PanAngleDef) designated in the attribute "pd" of the element "SegmentTemplate." This storing process of the URI is executed by, for example, the reproduction unit 240.

After the URI is stored in Step Sill, the content reproduction device 20 inquires the parameter description in the storage unit 310 using the URI (for example, urn: PanAngleDef) designated by the URL parameter (Step S112). The inquiry process of Step S112 is executed by, for example, the reproduction unit 240 through the communication unit 220. The storage unit 310 responds to the content reproduction device 20 with the main body of the corresponding parameter description described in, for example, WADL (Step S113).

Upon acquiring the main body of the parameter description from the storage unit 310, the content reproduction device 20 decides a parameter configuration method and acquires the content to be stored in the parameter (Step S114). The process of Step S114 can be executed by, for example, the reproduction unit 240. When a parameter of an angle of the network camera 11 is stored in the parameter, for example, the content reproduction device 20 stores the value of the angle of the network camera 11 in the parameter through a dialogue process with a user or the like.

Upon acquiring the content stored in the parameter, the content reproduction device 20 generates the URL of the segment to which the parameter has been added, and requests the segment in accordance with the http from the content server 10 (Step S115). Specifically, the content reproduction device 20 generates the URL of the segment to which the URL parameter has been added according to the rule described in the attribute "media" of the element "SegmentTemplate." For example, if there is a rule that the parameter be inserted into the portion "SubstitutionParameter" that is "angle" surrounded by symbols "$" in FIG. 9, for example, the content reproduction device 20 generates the URL of the segment to which the parameter has been added according to the rule. From the process of Step S115, the content reproduction device 20 generates the URL of the segment "http://cdn1.example.com/camera1/pan-40."

The content server 10 that has received the request from the content reproduction device 20 interprets the URL parameter and responds to the content reproduction device 20 with the main body of an optimal segment (Step S116). The content reproduction device 20 reproduces the segment received from the content server 10 (Step S117).

By executing the above-described series of processes with the content server 10, the content reproduction device 20 adds the parameter to the URL described in the MPD, accesses the address "http://cdn1.example.com/camera1/pan-40" to acquire a video captured by the network camera 11 facing the direction at an angle of 40 degrees, and thereby can reproduce the acquired video.

### <First embodiment>

### (Description of a computer to which the present disclosure is applied)

The series of processes described above can be executed by hardware or software. When the series of processes are executed by software, a program constituting the software is installed in a computer. Here, the computer includes a computer incorporated into dedicated hardware, a general-purpose personal computer, for example, that can execute various functions by installing various programs, and the like.

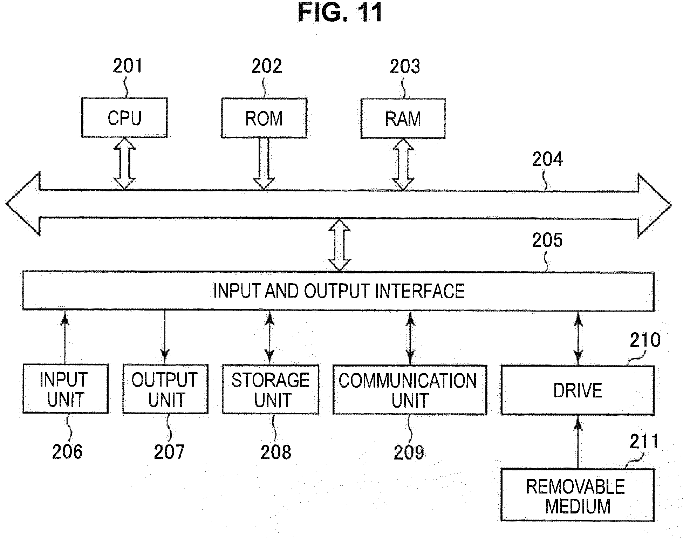

FIG. 11 is a block diagram illustrating an example of a hardware configuration of a computer which executes the above-described series of processes using a program.

In the computer, a central processing unit (CPU) 201, a read only memory (ROM) 202, and a random access memory (RAM) 203 are connected to one another by a bus 204.

The bus 204 is further connected with an input and output interface 205. The input and output interface 205 is connected with an input unit 206, an output unit 207, a storage unit 208, a communication unit 209, and a drive 210.

The input unit 206 includes a keyboard, a mouse, a microphone, or the like. The output unit 207 includes a display, a speaker, or the like. The storage unit 208 includes a hard disk, a non-volatile memory, or the like. The communication unit 209 includes a network interface or the like. The drive 210 drives a removable medium 211 such as a magnetic disk, an optical disc, a magneto-optical disc, or a semiconductor memory.

The series of processes described above are performed in the computer configured as described above when the CPU 201 loads, for example, the program stored in the storage unit 208 in the RAM 203 through the input and output interface 205 and the bus 204 for execution.

The program executed by the computer (CPU 201) can be provided by being recorded in the removable medium 211 serving as, for example, a package medium or the like. In addition, the program can be provided via a wired or wireless transmission medium such as a local area network, the Internet, or digital satellite broadcasting.

The program can be installed in the storage unit 208 of the computer using the input and output interface 205 by loading the removable medium 211 in the drive 210. In addition, the program can be received by the communication unit 209 and installed in the storage unit 208 via the wired or wireless transmission medium. Further, the program can be installed in advance in the ROM 202 or the storage unit 208.

Note that the program executed by the computer may be a program which performs the processes in a time series manner in the order described in the present specification, or may be a program which performs the processes in parallel or at necessary timings when they are invoked, or the like.

### <Second embodiment>

### (Application to multi-view image encoding/multi-view image decoding)

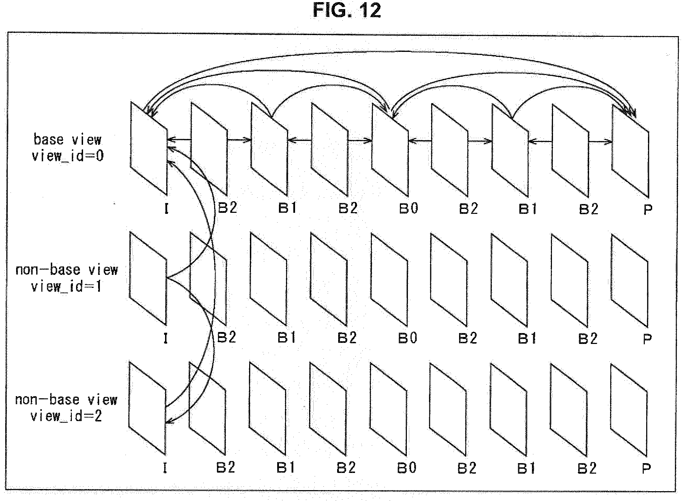

The series of processes described above can be applied to multi-view image encoding/multi-view image decoding. FIG. 12 illustrates an example of a multi-view image encoding scheme.

As illustrated in FIG. 12, a multi-view image includes images having a plurality of views. The plurality of views of the multi-view image include a base view for which encoding/decoding is performed using only the image of its own view without using images of other views and non-base views for which encoding/decoding is performed using images of other views. In a non-base view, the image of the base view may be used, and the image of the other non-base view may be used.

With the above configuration, transmission of redundant information can be suppressed and the amount of information (amount of coding) to be transmitted can be reduced (that is to say, deterioration in coding efficiency can be suppressed).

### (Multi-view image encoding device)

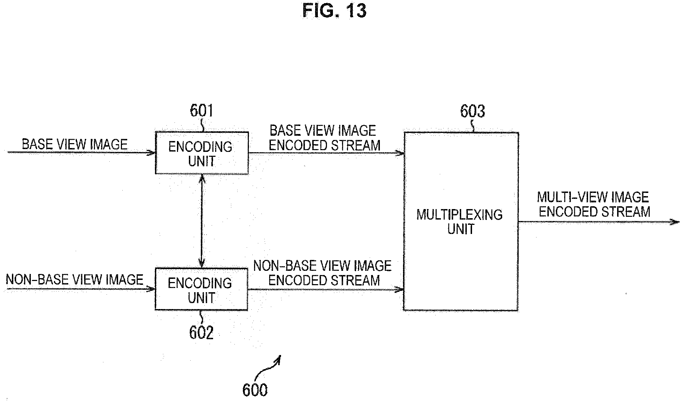

FIG. 13 is a diagram illustrating a multi-view image encoding device which performs the above-described multi-view image encoding. As illustrated in FIG. 13, the multi-view image encoding device 600 has an encoding unit 601, another encoding unit 602, and a multiplexing unit 603.

The encoding unit 601 encodes a base view image to generate a base view image encoded stream. The encoding unit 602 encodes a non-base view image to generate a non-base view image encoded stream. The multiplexing unit 603 multiplexes the base view image encoded stream generated by the encoding unit 601 and the non-base view image encoded stream generated by the encoding unit 602 to generate a multi-view image encoded stream.

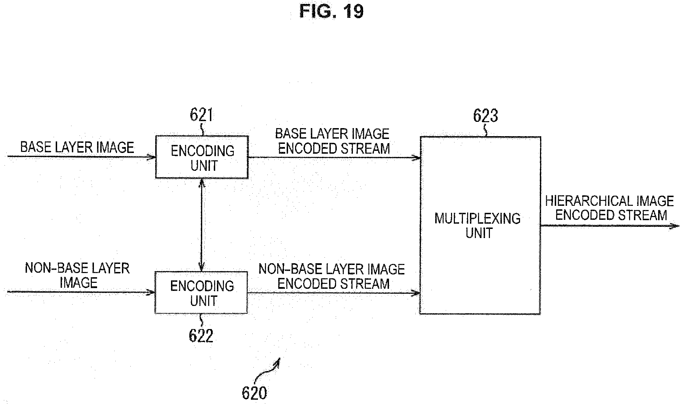

The encoding device 10 (of FIG. 19) can be applied to the encoding unit 601 and the encoding unit 602 of the multi-view image encoding device 600. That is to say, in encoding in each view, default mapping of resolution information and an enhancement layer can be improved. In addition, using the same flag or parameter together (for example, a syntax element relating to processing of images or the like), the encoding unit 601 and the encoding unit 602 can perform encoding (i.e., can share the flag or parameter), and thus deterioration in coding efficiency can be suppressed.

### (Multi-view image decoding device)

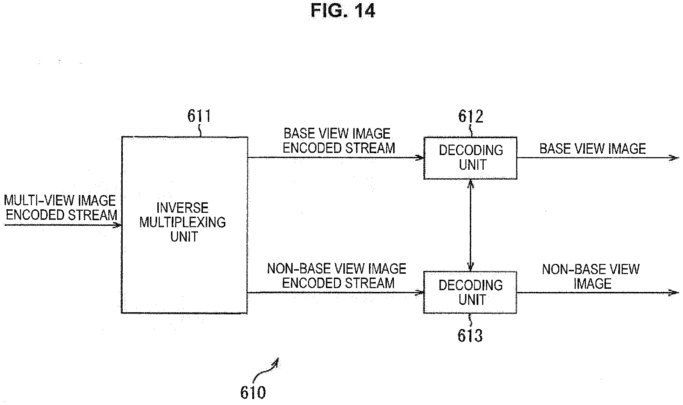

FIG. 14 is a diagram illustrating a multi-view image decoding device which performs the above-described multi-view image decoding. As illustrated in FIG. 14, the multi-view image decoding device 610 has an inverse multiplexing unit 611, a decoding unit 612, and another decoding unit 613.

The inverse multiplexing unit 611 inversely multiplexes the multi-view image encoded stream obtained by multiplexing the base view image encoded stream and the non-base view image encoded stream to extract the base view image encoded stream and the non-base view image encoded stream. The decoding unit 612 decodes the base view image encoded stream extracted by the inverse multiplexing unit 611 to obtain the base view image. The decoding unit 613 decodes the non-base view image encoded stream extracted by the inverse multiplexing unit 611 to obtain the non-base view image.

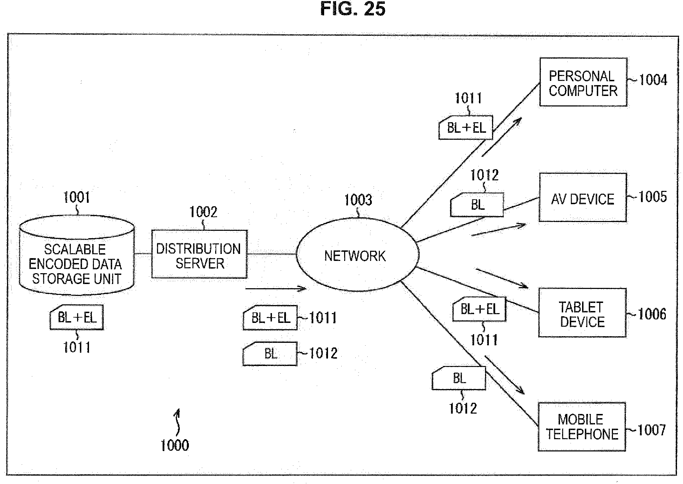

A decoding device 110 (of FIG. 25) can be applied to the decoding unit 612 and the decoding unit 613 of the multi-view image decoding device 610. That is to say, default mapping of resolution information and the enhancement layer can be improved. In addition, using the same flag or parameter together (for example, a syntax element relating to processing of images or the like), the decoding unit 612 and the decoding unit 613 can perform decoding (i.e., can share the flag or parameter), and thus deterioration in coding efficiency can be suppressed.

### <Third embodiment>

### (Application to hierarchical image encoding/hierarchical image decoding)

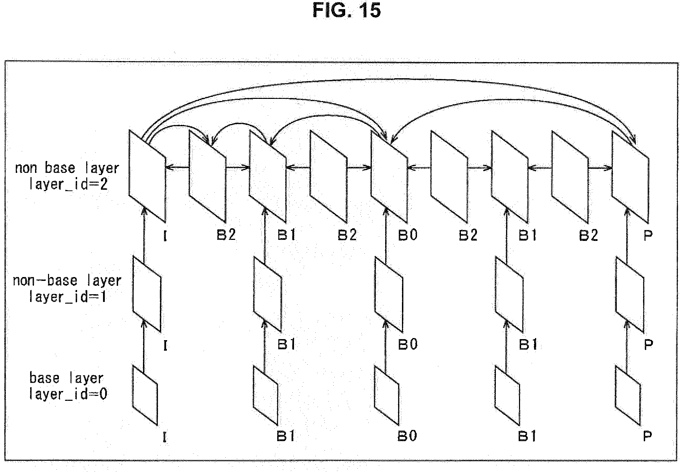

The series of processes described above can be applied to hierarchical image encoding/hierarchical image decoding (scalable encoding/scalable decoding). FIG. 15 illustrates an example of a hierarchical image encoding scheme.

Hierarchical image encoding (scalable encoding) involves dividing an image into a plurality of layers (hierarchized) and performing encoding for each layer so that image data can have scalability with respect to a predetermined parameter. Hierarchical image decoding (scalable decoding) is decoding that corresponds to the hierarchical image encoding.

As illustrated in FIG. 15, in hierarchizing of an image, one image is divided into a plurality of images (layers) with respect to a predetermined parameter that brings scalability. That is to say, the hierarchized image (hierarchical image) includes images with a plurality of hierarchies (layers) which have different values of the predetermined parameter. The plurality of layers of the hierarchical image are constituted by a base layer for which encoding/decoding is performed using only the image of its own layer without using images of other layers and non-base layers (each of which is also referred to as an enhancement layer) for which encoding/decoding is performed using images of other layers. A non-base layer may use the image of the base layer, or use the image of another non-base layer.

In general, a non-base layer includes data of the differential image (differential data) of its own image and the image of another layer so that redundancy is reduced. When one image has been divided into two hierarchies of a base layer and a non-base layer (also referred to as an enhancement layer), for example, an image with a lower quality than the original image is obtained only with data of the base layer, and by combining data of the base layer and data of the non-base layer, the original image (i.e., a high-quality image) is obtained.

By hierarchizing an image as described above, images with various levels of quality according to situations can be easily obtained. For example, image compression information according to a capability of a terminal or a network can be transmitted from a server without performing a transcoding process as when image compression information of only a base layer is transmitted to a terminal with a low processing capability such as a mobile telephone to reproduce a dynamic image having low spatial and temporal resolution or poor image quality or when image compression information of an enhancement layer in addition to a base layer is transmitted to a terminal with a high processing capability such as a television or a personal computer to reproduce a dynamic image having high spatial and temporal resolution or high image quality.

With the above configuration, transmission of redundant information can be suppressed and the amount of information (amount of coding) to be transmitted can be reduced (that is to say, deterioration in coding efficiency can be suppressed).

### (Scalable parameter)

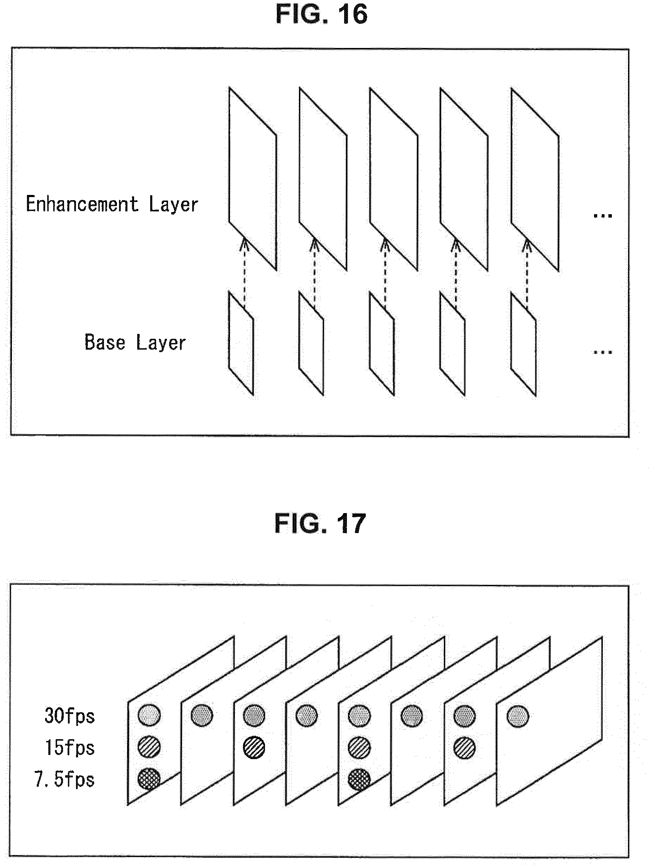

A parameter that brings scalability in the hierarchical image encoding/hierarchical image decoding (scalable encoding/scalable decoding) is arbitrary. For example, spatial resolution illustrated in FIG. 16 may be set to be the parameter (spatial scalability). In spatial scalability, each layer has different image resolution. That is to say, in this case, each picture is divided into two hierarchies including a base layer with lower spatial resolution than the original image and an enhancement layer from which the original spatial resolution is obtained when the layer is combined with the base layer as illustrated in FIG. 16. The number of hierarchies is of course an example, and an image can be divided into any number of hierarchies.

In addition, as a parameter that brings scalability as above, for example, temporal resolution may also be adopted (temporal scalability) as illustrated in FIG. 17. In temporal scalability, each layer has a different frame rate. That is to say, in this case, each picture is divided into two hierarchies including a base layer with a lower frame rate than the original dynamic image and an enhancement layer from which the original frame rate is obtained when the layer is combined with the base layer as illustrated in FIG. 17. The number of hierarchies is of course an example, and an image can be divided into any number of hierarchies.

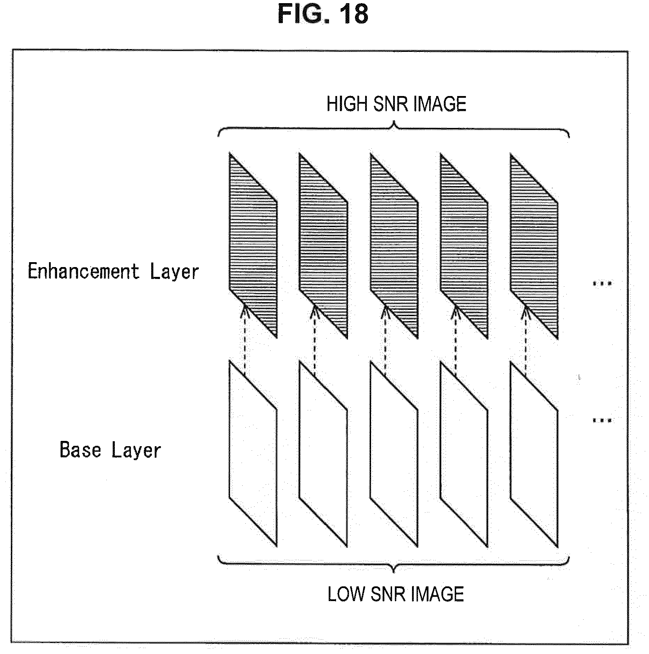

Furthermore, as another parameter that brings scalability as above, for example, a signal-to-noise ratio (SNR) may be adopted (SNR scalability). In SNR scalability, each layer has a different SN ratio. That is to say, in this case, each picture is divided into two hierarchies including a base layer with a lower SNR than the original image and an enhancement layer from which the original SNR is obtained when the layer is combined with the base layer as illustrated in FIG. 18. The number of hierarchies is of course an example, and an image can be divided into any number of hierarchies.

Any parameter that brings scalability may be adopted in addition to the above-described examples. For example, as a parameter that brings scalability, bit depth can also be used (bit-depth scalability). In this bit-depth scalability, each layer has different bit depth. In this case, for example, a base layer is composed of an 8-bit image, and by adding an enhancement layer thereto, a 10-bit image can be obtained.

In addition, as a parameter that brings scalability, a chroma format can also be used (chroma scalability). In this chroma scalability, each layer has a different chroma format. In this case, for example, a base layer is composed of a component image in the 4:2:0 format, and by adding an enhancement layer thereto, a component image in the 4:2:2 format can be obtained.

### (Hierarchical image encoding device)

FIG. 19 is a diagram illustrating a hierarchical image encoding device which performs the above-described hierarchical image encoding. The hierarchical image encoding device 620 has an encoding unit 621, another encoding unit 622, and a multiplexing unit 623 as illustrated in FIG. 19.

The encoding unit 621 encodes a base layer image to generate a base layer image encoded stream. The encoding unit 622 encodes a non-base layer image to generate a non-base layer image encoded stream. The multiplexing unit 623 multiplexes the base layer image encoded stream generated by the encoding unit 621 and the non-base layer image encoded stream generated by the encoding unit 622 to generate a hierarchical image encoded stream.

The encoding device 10 (of FIG. 19) can be applied to the encoding unit 621 and the encoding unit 622 of the hierarchical image encoding device 620. That is to say, default mapping of resolution information and an enhancement layer can be improved. In addition, using the same flag or parameter together (for example, a syntax element relating to processing of images or the like), the encoding unit 621 and the encoding unit 622 can perform control of a filtering process of intra prediction (i.e., can share the flag or parameter), and thus deterioration in coding efficiency can be suppressed.

### (Hierarchical image decoding device)

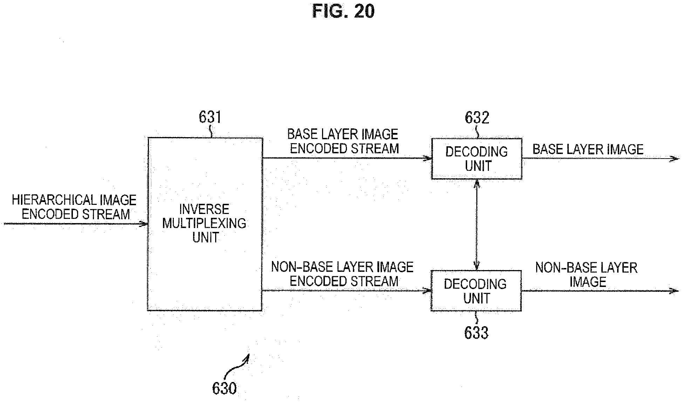

FIG. 20 is a diagram illustrating a hierarchical image decoding device which performs the above-described hierarchical image decoding. The hierarchical image decoding device 630 has an inverse multiplexing unit 631, a decoding unit 632, and another decoding unit 633 as illustrated in FIG. 20.

The inverse multiplexing unit 631 inversely multiplexes the hierarchical image encoded stream obtained by multiplexing the base layer image encoded stream and the non-base layer image encoded stream to extract the base layer image encoded stream and the non-base layer image encoded stream. The decoding unit 632 decodes the base layer image encoded stream extracted by the inverse multiplexing unit 631 to obtain the base layer image. The decoding unit 633 decodes the non-base layer image encoded stream extracted by the inverse multiplexing unit 631 to obtain the non-base layer image.

The decoding device 110 (of FIG. 25) can be applied to the decoding unit 632 and the decoding unit 633 of the hierarchical image decoding device 630. That is to say, default mapping of resolution information and the enhancement layer can be improved. In addition, using the same flag or parameter together (for example, a syntax element relating to processing of images or the like), the decoding unit 612 and the decoding unit 613 can perform decoding (i.e., can share the flag or parameter), and thus deterioration in coding efficiency can be suppressed.

### <Fourth embodiment>

### (Example of a configuration of television device)

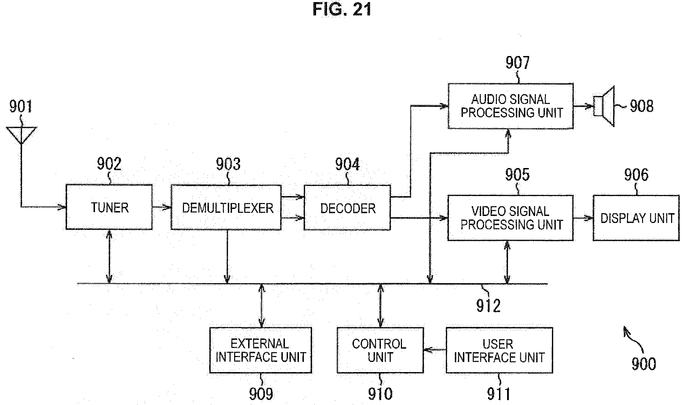

FIG. 21 illustrates a schematic configuration of a television device to which the present disclosure is applied. The television device 900 has an antenna 901, a tuner 902, a demultiplexer 903, a decoder 904, a video signal processing unit 905, a display unit 906, an audio signal processing unit 907, a speaker 908, and an external interface unit 909. Further, the television device 900 has a control unit 910, a user interface unit 911, and the like.

The tuner 902 tunes to a desired channel from a broadcasting signal received by the antenna 901 to perform demodulation, and outputs an obtained encoded bit stream to the demultiplexer 903.

The demultiplexer 903 extracts video and audio packets of a program to be viewed from the encoded bit stream and outputs data of the extracted packets to the decoder 904. In addition, the demultiplexer 903 supplies packets of data of an electronic program guide (EPG) to the control unit 910. Note that, when scrambling is performed, the scrambling is canceled by the demultiplexer or the like.

The decoder 904 performs a decoding process on the packets, and outputs video data and audio data generated from the decoding process to the video signal processing unit 905 and to the audio signal processing unit 907, respectively.

The video signal processing unit 905 performs noise removal, video processing according to a user setting, or the like on the video data. The video signal processing unit 905 generates video data of the program to be displayed on the display unit 906, image data from a process based on an application supplied through a network, or the like. In addition, the video signal processing unit 905 generates video data for displaying a menu screen such as for selecting an item, and superimposes the data on the video data of the program. The video signal processing unit 905 generates a driving signal based on the video data generated as described above to drive the display unit 906.

The display unit 906 drives display devices (for example, liquid crystal display elements) based on the driving signal from the video signal processing unit 905 to display videos of the program and the like.

The audio signal processing unit 907 performs audio output by performing a predetermined process such as noise removal on the audio data, performing a D-A conversion process or an amplifying process on the processed audio data, and supplying the data to the speaker 908.

The external interface unit 909 is an interface for connecting an external device with a network, and performs transmission and reception of data such as video data and audio data.

The control unit 910 is connected with the user interface unit 911. The user interface unit 911 is configured as a manipulating switch or a remotely controlled signal reception unit, and supplies an operation signal to the control unit 910 according to a user operation.

The control unit 910 is configured using a central processing unit (CPU), a memory, and the like. The memory stores programs executed by the CPU, various kinds of data necessary for the CPU to perform processes, EPG data, data acquired through a network, and the like. The programs stored in the memory are read and executed by the CPU at predetermined timings such as when the television device 900 is turned on. By executing the programs, the CPU controls the respective units so that the television device 900 is operated according to user operations.

Note that, in the television device 900, a bus 912 is provided to connect the tuner 902, the demultiplexer 903, the video signal processing unit 905, the audio signal processing unit 907, the external interface unit 909, and the like with the control unit 910.

The decoder 904 of the television device configured as described above is provided with the function of the decoding device (decoding method) of the present application. For this reason, in the decoding process of an encoded stream, default mapping of resolution information and an enhancement layer can be improved.

### <Fifth embodiment>

### (Example of configuration of mobile telephone)

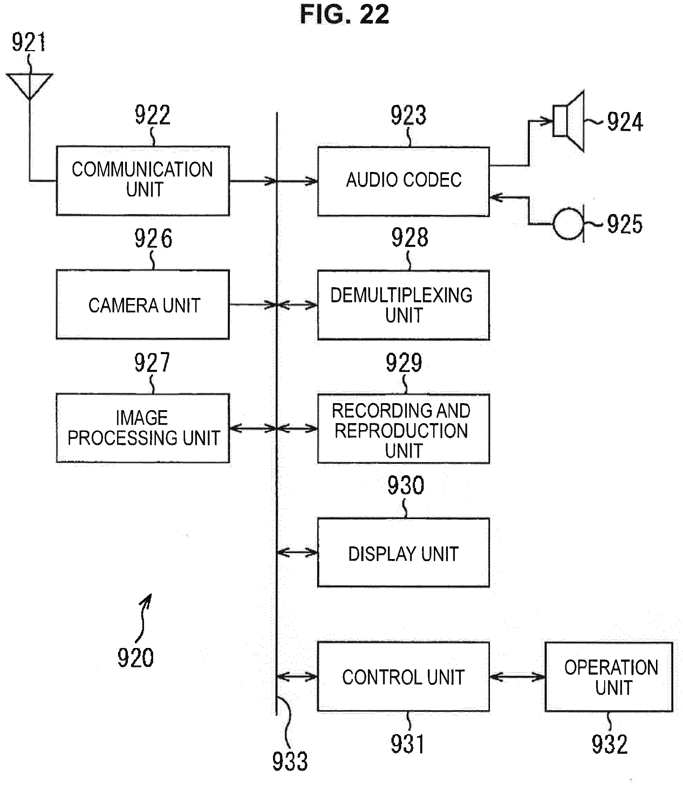

FIG. 22 illustrates a schematic configuration of a mobile telephone to which the present disclosure is applied. The mobile telephone 920 has a communication unit 922, an audio codec 923, a camera unit 926, an image processing unit 927, a demultiplexing unit 928, a recording and reproduction unit 929, a display unit 930, and a control unit 931. The constituent elements are connected to one another by a bus 933.

In addition, an antenna 921 is connected to the communication unit 922, and a speaker 924 and a microphone 925 are connected to the audio codec 923. Further, an operation unit 932 is connected to the control unit 931.

The mobile telephone 920 performs various operations such as transmission and reception of audio signals, transmission and reception of e-mails and image data, capturing of images, recording of data, and the like in various modes such as a voice call mode, a data communication mode, and the like.

In the voice call mode, an audio signal generated from the microphone 925 is converted into audio data or compressed into data by the audio codec 923, and supplied to the communication unit 922. The communication unit 922 performs a modulation process, a frequency converting process, or the like on the audio data to generate a transmission signal. Furthermore, the communication unit 922 supplies the transmission signal to the antenna 921 to transmit the signal to a base station that is not illustrated. In addition, the communication unit 922 performs amplification or a frequency converting process and a demodulation process on a reception signal received with the antenna 921, and supplies the obtained audio data to the audio codec 923. The audio codec 923 performs decompression of the audio data or conversion into an analog audio signal and outputs the data to the speaker 924.

In addition, when mail transmission is performed in the data communication mode, the control unit 931 receives character data input through an operation of the operation unit 932 and displays the input character on the display unit 930. Further, the control unit 931 generates mail data based on a user instruction or the like from the operation unit 932 and supplies the data to the communication unit 922. The communication unit 922 performs a modulation process or a frequency converting process on the mail data, and transmits the obtained transmission signal from the antenna 921. In addition, the communication unit 922 performs amplification or a frequency converting process and a demodulation process on a reception signal received with the antenna 921 to restore mail data. This mail data is supplied to the display unit 930 and the content of the mail is displayed.

Note that the mobile telephone 920 can also cause the received mail data to be stored in a storage medium using the recording and reproduction unit 929. The storage medium is an arbitrary rewritable storage medium. For example, the storage medium is a semiconductor memory such as a RAM or a built-in flash memory, or a removable medium such as a hard disk, a magnetic disk, a magneto-optical disc, an optical disc, a Universal Serial Bus (USB) memory, or a memory card.

When image data is transmitted in the data communication mode, the image data generated by the camera unit 926 is supplied to the image processing unit 927. The image processing unit 927 performs an encoding process on the image data to generate encoded data.

The demultiplexing unit 928 multiplexes the encoded data generated by the image processing unit 927 and the audio data supplied from the audio codec 923 in a predetermined scheme and supplies the data to the communication unit 922. The communication unit 922 performs a modulation process, a frequency converting process, or the like on the multiplexed data and transmits the obtained transmission signal from the antenna 921. In addition, the communication unit 922 performs amplification or a frequency converting process and a demodulation process on a reception signal received with the antenna 921 to restore multiplexed data. This multiplexed data is supplied to the demultiplexing unit 928. The demultiplexing unit 928 demultiplexes the multiplexed data, and supplies encoded data to the image processing unit 927 and audio data to the audio codec 923. The image processing unit 927 performs a decoding process on the encoded data to generate image data. This image data is supplied to the display unit 930 and display of the received image is performed. The audio codec 923 converts the audio data into an analog audio signal and supplies the signal to the speaker 924 to output a received sound.

The image processing unit 927 of the mobile telephone device configured as described above serves as the encoding device and the decoding device (using the encoding method and the decoding method) of the present application. For this reason, default mapping of resolution information and an enhancement layer can be improved.

### <Sixth embodiment

### (Example of configuration of recording and reproduction device)

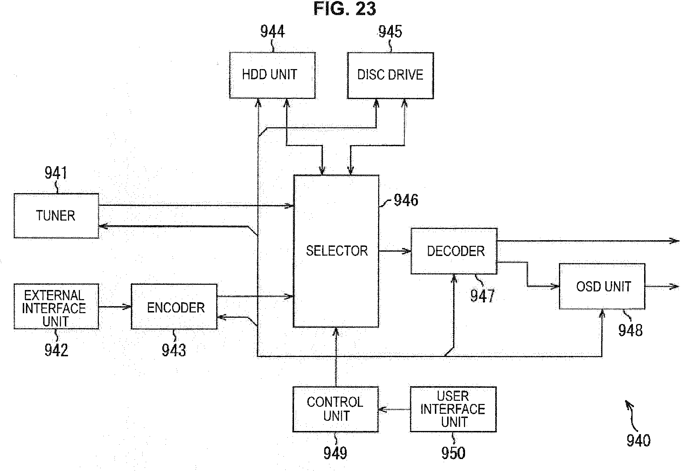

FIG. 23 illustrates a schematic configuration of a recording and reproduction device to which the present disclosure is applied. The recording and reproduction device 940 records, for example, received audio data and video data of a broadcast program on a recording medium and supplies the recorded data to a user at a timing instructed by the user. In addition, the recording and reproduction device 940 can also acquire audio data and video data from, for example, another device and record the data on a recording medium. Furthermore, by decoding and outputting the audio data and video data recorded on the recording medium, the recording and reproduction device 940 can display images and output sounds from a monitor device or the like.

The recording and reproduction device 940 has a tuner 941, an external interface unit 942, an encoder 943, a hard disk drive (HDD) unit 944, a disc drive 945, a selector 946, a decoder 947, an on-screen display (OSD) unit 948, a control unit 949, and a user interface unit 950.

The tuner 941 tunes to a desired channel from a broadcasting signal received with an antenna that is not illustrated. The tuner 941 outputs an encoded bit stream obtained by demodulating a reception signal of the desired channel to the selector 946.

The external interface unit 942 is configured as at least one of an IEEE 1394 interface, a network interface unit, a USB interface, a flash memory interface, and the like. The external interface unit 942 is an interface for connecting to an external device, a network, a memory card, or the like, to receive data such as video data or audio data to be recorded.

The encoder 943 encodes the video data or the audio data supplied from the external interface unit 942 in a predetermined scheme when the data has not been encoded, and outputs an encoded bit stream to the selector 946.

The HDD unit 944 records content data of videos and sounds, various programs, other types of data, and the like on a built-in hard disk, and reads such data from the hard disk at the time of reproduction.

The disc drive 945 performs recording and reproduction of a signal for a loaded optical disc. The optical disc includes, for example, a DVD disc (DVD-Video, DVD-RAM, DVD-R, DVD-RW, DVD+R, DVD+RW, and the like), a Blu-ray (registered trademark) disc, and the like.

The selector 946 selects any encoded bit stream from the tuner 941 or the encoder 943 and supplies the encoded bit stream to any of the HDD unit 944 and the disc drive 945 at the time of recording of a video or a sound. In addition, the selector 946 supplies the encoded bit stream output from the HDD unit 944 or the disc drive 945 to the decoder 947 at the time of reproduction of a video or a sound.

The decoder 947 performs a decoding process on the encoded bit stream. The decoder 947 supplies video data generated by performing the decoding process to the OSD unit 948. In addition, the decoder 947 outputs audio data generated by performing the decoding process.

The OSD unit 948 generates video data for displaying a menu screen for selection of items or the like, and superimposes the video data on video data output from the decoder 947 for output.

The control unit 949 is connected to the user interface unit 950. The user interface unit 950 is configured as a manipulating switch, a remotely controlled signal reception unit, or the like, and supplies an operation signal to the control unit 949 according to a user operation.

The control unit 949 is configured using a CPU, a memory, and the like. The memory stores programs executed by the CPU or various kinds of data necessary for the CPU to perform processes. The program stored in the memory is read and executed by the CPU at a predetermined timing such as when the recording and reproduction device 940 is turned on or the like. By executing the program, the CPU controls respective units so that the recording and reproduction device 940 operates according to a user operation.

The encoder 943 of the recording and reproduction device configured as described above serves as the encoding device (using the encoding method) of the present application. For this reason, in encoding of an encoded stream, default mapping of resolution information and an enhancement layer can be improved. In addition, the decoder 947 serves as the decoding device (using the decoding method) of the present application. For this reason, in decoding of an encoded stream, default mapping of resolution information and an enhancement layer can be improved.

### <Seventh embodiment>

### (Example of configuration of imaging device)

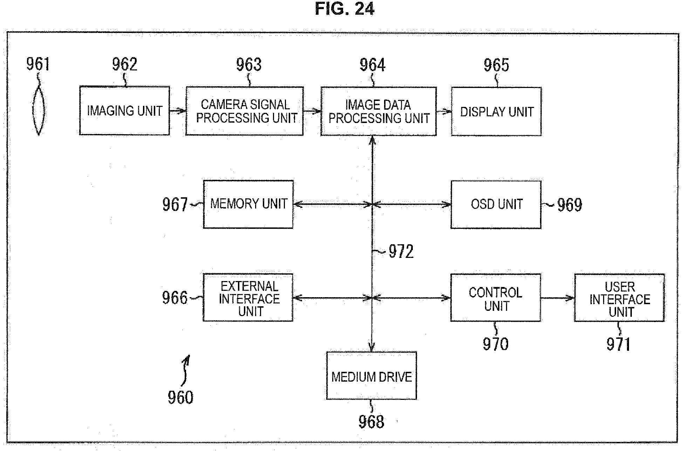

FIG. 24 illustrates a schematic configuration of an imaging device to which the present disclosure is applied. The imaging device 960 captures an image of a subject, causes the image of the subject to be displayed on a display unit, or records the image on a recording medium in the form of image data.

The imaging device 960 has an optical block 961, an imaging unit 962, a camera signal processing unit 963, an image data processing unit 964, a display unit 965, an external interface unit 966, a memory unit 967, a medium drive 968, an OSD unit 969, and a control unit 970. In addition, a user interface unit 971 is connected to the control unit 970. Furthermore, the image data processing unit 964, the external interface unit 966, the memory unit 967, the medium drive 968, the OSD unit 969, the control unit 970, and the like are connected to one another via a bus 972.

The optical block 961 is configured using a focus lens, an aperture mechanism, and the like. The optical block 961 causes an optical image of a subject to be formed on an imaging plane of the imaging unit 962. The imaging unit 962 is configured using a CCD or a CMOS image sensor, and generates an electric signal according to an optical image through photoelectric conversion and supplies the signal to the camera signal processing unit 963.

The camera signal processing unit 963 performs various camera signal processes such as knee correction, gamma correction, or color correction on the electric signal supplied from the imaging unit 962. The camera signal processing unit 963 supplies image data that has undergone the camera signal process to the image data processing unit 964.

The image data processing unit 964 performs an encoding process on the image data supplied from the camera signal processing unit 963. The image data processing unit 964 supplies encoded data generated by performing the encoding process to the external interface unit 966 or the medium drive 968. In addition, the image data processing unit 964 performs a decoding process on encoded data supplied from the external interface unit 966 or the medium drive 968. The image data processing unit 964 supplies image data generated by performing the decoding process to the display unit 965. In addition, the image data processing unit 964 performs a process of supplying the image data supplied from the camera signal processing unit 963 to the display unit 965, or superimposes data for display acquired from the OSD unit 969 on the image data and supplies the data to the display unit 965.

The OSD unit 969 generates data for display such as a menu screen or an icon composed of a symbol, a character, or a figure and outputs the data to the image data processing unit 964.

The external interface unit 966 is configured as, for example, a USB input and output terminal or the like, and is connected to a printer when an image is to be printed. In addition, the external interface unit 966 is connected with a drive when it is necessary to appropriately load a removable medium such as a magnetic disk or an optical disc, and a computer program read therefrom is installed when necessary. Furthermore, the external interface unit 966 has a network interface connected to a predetermined network such as a LAN or the Internet. The control unit 970 can read encoded data from the medium drive 968 according to an instruction from the user interface unit 971, and supply the data to another device connected with the external interface unit 966 via a network. In addition, the control unit 970 can acquire encoded data or image data supplied from another device via the external interface unit 966 via a network or can supply the data to the image data processing unit 964.

As a recording medium driven in the medium drive 968, for example, any readable and writable removable medium such as a magnetic disk, a magneto-optical disc, an optical disc, or a semiconductor memory can be used. In addition, the type of recording medium serving as the removable medium is arbitrary, and it may be a tape device, a disc, or a memory card. It may of course be a non-contact integrated circuit (IC) card or the like.

In addition, the medium drive 968 and a recording medium may be integrated to configure a non-portable recording medium like, for example, a built-in hard disk drive, a solid-state drive (SSD), or the like.

The control unit 970 is configured using a CPU. The memory unit 967 stores programs executed by the control unit 970 or various kinds of data and the like necessary for the control unit 970 to execute processes. The program stored in the memory unit 967 is read and executed by the control unit 970 at a predetermined timing such as when the imaging device 960 is turned on. By executing the program, the control unit 970 controls respective units so that the imaging device 960 operates according to a user operation.

The image data processing unit 964 of the imaging device configured as described above serves as the encoding device and the decoding device (using the encoding method and the decoding method) of the present application. For this reason, in encoding or decoding of an encoded stream, default mapping of resolution information and an enhancement layer can be improved.

### <Application example of scalable encoding>

### (First system)

Next, an example of a specific use of scalable encoded data that is subject to scalable encoding (hierarchical encoding) will be described. Scalable encoding is used to select data to be transmitted, as in, for example, the example illustrated in FIG. 25.

In a data transmission system 1000 illustrated in FIG. 25, a distribution server 1002 reads scalable encoded data stored in a scalable encoded data storage unit 1001, and distributes the data to a terminal device such as a personal computer 1004, an AV device 1005, a tablet device 1006, a mobile telephone 1007, and the like via a network 1003.

In this case, the distribution server 1002 selects and transmits encoded data having proper quality for capability, a communication environment, or the like of a terminal device. Even if the distribution server 1002 transmits data having unnecessarily high quality, the terminal device may not be able to obtain high-quality images, and thus there is concern of such transmission causing a delay or overflow. In addition, occupying an unnecessary communication band or an unnecessary increase in a load on the terminal device is also a concern. Conversely, if the distribution server 1002 transmits data having unnecessarily low quality, there is concern of the terminal device failing to obtain images with proper quality. For this reason, the distribution server 1002 appropriately reads and transmits scalable encoded data stored in the scalable encoded data storage unit 1001 as encoded data having proper quality for capability, a communication environment, or the like of the terminal device.

For example, the scalable encoded data storage unit 1001 stores scalable encoded data (BL+EL) 1011 that has undergone scalable encoding. The scalable encoded data (BL+EL) 1011 is encoded data that includes both a base layer and an enhancement layer, and data from which both an image of the base layer and an image of the enhancement layer can be obtained through decoding.

The distribution server 1002 selects an appropriate layer for the capability, communication environment, or the like of the terminal device to which data is transmitted, and reads data of the layer. For example, the distribution server 1002 reads the high-quality scalable encoded data (BL+EL) 1011 from the scalable encoded data storage unit 1001 and transmits the data without change to the personal computer 1004 or the tablet device 1006 having a high processing capability. On the other hand, the distribution server 1002 extracts, for example, data of the base layer from the scalable encoded data (BL+EL) 1011 and transmits the data as data of the same content as the scalable encoded data (BL+EL) 1011 and as scalable encoded data (BL) 1012 having lower quality than the scalable encoded data (BL+EL) 1011 to the AV device 1005 or the mobile telephone 1007 having low processing performance.

Since the amount of data can be easily adjusted by using such scalable encoded data as described above, occurrence of a delay or an overflow can be suppressed, and an unnecessary increase in a load on the terminal device or a communication medium can be suppressed. In addition, since redundancy between layers is reduced in the scalable encoded data (BL+EL) 1011, the amount of the data can be reduced more than when the encoded data of each layer is set as individual data. Thus, the storage area of the scalable encoded data storage unit 1001 can be more efficiently used.

Note that, since various devices can be applied as the terminal devices such as the personal computer 1004 to the mobile telephone 1007, each device has different hardware performance. In addition, since applications executed by the terminal devices also vary, software performance also varies. Furthermore, for the network 1003 serving as a communication medium, wired or wireless communication medium such as the Internet or a local area network (LAN) or all communication circuit lines that include both communication types can be applied, and data transmission performance thereof varies. Furthermore, there is concern of performance changing according to other communication types.

Thus, the distribution server 1002 may be set to communicate with a terminal device serving as a data transmission destination before starting data transmission to obtain information regarding a capability of the terminal device such as hardware performance of the terminal device or application (software) performance to be executed by the terminal device and information regarding a communication environment such as an available bandwidth or the like of the network 1003. Thus, the distribution server 1002 may be set to select an appropriate layer based on the obtained information.

Note that the terminal devices may be set to extract layers. For example, the personal computer 1004 may be set to decode the transmitted scalable encoded data (BL+EL) 1011 to display the image of the base layer or to display the image of the enhancement layer. In addition, for example, the personal computer 1004 may be set to extract the scalable encoded data (BL) 1012 of the base layer from the transmitted scalable encoded data (BL+EL) 1011 to store the data, to transfer the data to another device, or to decode and display the image of the base layer.

The numbers of scalable encoded data storage units 1001, distribution servers 1002, networks 1003, and terminal devices are all arbitrary of course. In addition, although the example in which the distribution server 1002 transmits data to the terminal devices has been described, a use example is not limited thereto. Any system can be applied to the data transmission system 1000 as long as it is a system in which an appropriate layer is selected and transmitted according to a capability, a communication environment, or the like of a terminal device when encoded data that has undergone scalable encoding is transmitted to the terminal device.

### (Second system)

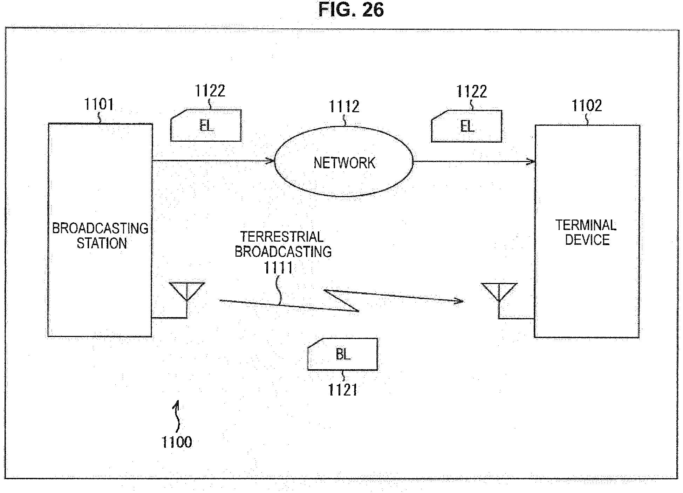

In addition, scalable encoding is used for transmission through a plurality of communication media as in, for example, the example illustrated in FIG. 26.

In a data transmission system 1100 illustrated in FIG. 26, a broadcasting station 1101 transmits scalable encoded data (BL) 1121 of a base layer through terrestrial broadcasting 1111. In addition, the broadcasting station 1101 transmits (for example, packetizes and transmits) scalable encoded data (EL) 1122 of an enhancement layer through an arbitrary network 1112 including a wired or wireless communication network or both communication networks.

A terminal device 1102 has a function of receiving the terrestrial broadcasting 1111 broadcast by the broadcasting station 1101, and thus receives the scalable encoded data (BL) 1121 of the base layer transmitted through the terrestrial broadcasting 1111. In addition, the terminal device 1102 further has a communication function of communicating via the network 1112, and thus receives scalable encoded data (EL) 1122 of an enhancement layer transmitted through the network 1112.

The terminal device 1102 decodes the scalable encoded data (BL) 1121 of the base layer acquired from the terrestrial broadcasting 1111 to obtain, to store, or to transmit the image of the base layer to another device.

In addition, according to a user instruction or the like, for example, the terminal device 1102 combines the scalable encoded data (BL) 1121 of the base layer acquired through the terrestrial broadcasting 1111 and the scalable encoded data (EL) 1122 of the enhancement layer acquired through the network 1112 to obtain scalable encoded data (BL+EL), and decodes the combined data to obtain, to store, or to transmit an image of the enhancement layer to another device.

As described above, the scalable encoding data can be transmitted, for example, via different communication media for each layer. Thus, a load can be distributed, and occurrence of a delay or an overflow can be suppressed.

In addition, a communication medium to be used in transmission can be selected for each layer according to situations. For example, the scalable encoded data (BL) 1121 of a relatively large data amount may be transmitted via a communication medium having a wide bandwidth, and the scalable encoded data (EL) 1122 of the enhancement layer of a relatively small data amount may be transmitted via a communication medium having a narrow bandwidth. In addition, a communication medium on which the scalable encoded data (EL) 1122 of the enhancement layer is to be transmitted may be set to be switched to the network 1112 or the terrestrial broadcasting 1111 according to an available bandwidth of the network 1112. The same applies to data of any layer, of course.

By performing control as described above, an increase in a load of data transmission can be further suppressed.

Of course, the number of layers is arbitrary, and the number of communication media used in transmission is also arbitrary. In addition, the number of terminal devices 1102 serving as data distribution destinations is arbitrary. Furthermore, although the example of broadcasting from the broadcasting station 1101 has been described above, a use example is not limited thereto. Any system can be applied to the data transmission system 1100 as long as it is a system in which encoded data that has undergone scalable encoding is divided into a plurality of pieces in units of layers and transmitted via a plurality of lines.

### (Third system)

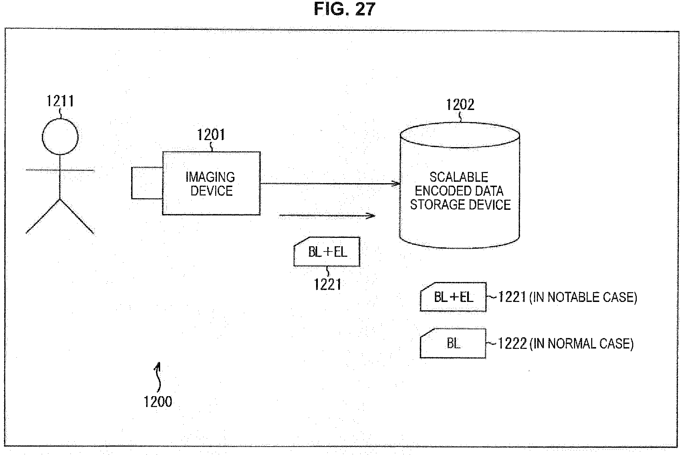

In addition, scalable encoding is used in storing of encoded data as in, for example, the example illustrated in FIG. 27.

In an imaging system 1200 illustrated in FIG. 27, an imaging device 1201 performs scalable encoding on image data obtained by capturing an image of a subject 1211, and supplies the data to a scalable encoded data storage device 1202 as scalable encoded data (BL+EL) 1221.

The scalable encoded data storage device 1202 stores the scalable encoded data (BL+EL) 1221 supplied from the imaging device 1201 with quality decided according to a situation. For example, in normal time, the scalable encoded data storage device 1202 extracts data of a base layer from the scalable encoded data (BL+EL) 1221, and stores the data as scalable encoded data (BL) 1222 of the base layer with low quality and a small data amount. On the other hand, for example, in notable cases, the scalable encoded data storage device 1202 stores the scalable encoded data (BL+EL) 1221 with high quality and a large data amount as is.

Since the scalable encoded data storage device 1202 can save images in high quality only when necessary under the settings described above, an increase in a data amount can be suppressed and use efficiency of a storage area can be improved while suppressing a decrease in the value of the images caused by degradation of image quality.

The imaging device 1201 is assumed to be, for example, a surveillance camera. When no surveillance target (for example, an intruder) is included a captured image (in normal cases), there is a high possibility of the content of the captured image being unimportant, and thus a decrease in a data amount is prioritized, and the image data (scalable encoded data) is stored with low quality. On the other hand, when a surveillance target is included in a captured image as the subject 1211 (in notable cases), there is a high possibility of the content of the captured image being important, and thus image quality is prioritized, and the image data (scalable encoded data) is stored with high quality.

Note that normal cases and notable cases may be determined by, for example, the scalable encoded data storage device 1202 by analyzing an image. In addition, they may be determined by the imaging device 1201 and a result of the determination may be transmitted to the scalable encoded data storage device 1202.

Note that a criterion for determining normal cases and notable cases is arbitrary, and the content of an image serving as a criterion for the determination is arbitrary. A condition other than the content of an image can of course be set as a criterion for the determination. For example, the states may be switched according to the size, waveform, or the like or a recorded sound, may be switched at predetermined intervals, or may be switched according to an instruction from outside such as a user instruction.

In addition, although the example in which two states of a normal case and a notable case are switched has been described above, the number of states is arbitrary, and three or more states may be switched, for example, a normal case, a slightly notable case, a notable case, a particularly notable case, and the like. However, the upper limit of the number of states to be switched depends on the number of layers of scalable encoded data.

In addition, the imaging device 1201 may decide the number of layers of scalable encoded according to states. For example, in normal cases, the imaging device 1201 may generate the scalable encoded data (BL) 1222 of the base layer with low quality and a small data amount and supply the data to the scalable encoded data storage device 1202. In addition, in notable cases, for example, the imaging device 1201 may generate the scalable encoded data (BL+EL) 1221 of the base layer with high quality and a large data amount and supply the data to the scalable encoded data storage device 1202.

Although the surveillance camera has been exemplified in the above description, application of the imaging system 1200 is arbitrary and is not limited to the surveillance camera.

### <Eighth embodiment>

### (Other examples)

Although the examples of devices, systems, and the like to which the present disclosure is applied have been described above, the present disclosure is not limited thereto, and can be implemented as any configuration mounted in the devices or devices constituting the systems, for example, processors in the form of system large scale integration (LSI), modules that use a plurality of processors, units that use a plurality of modules, sets obtained by further adding other functions to the units (i.e., a partial configuration of the devices), and the like.

### (Example of configuration of video set)

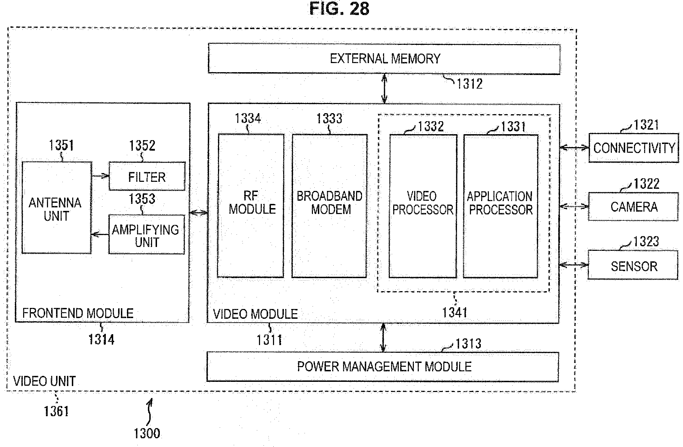

An example in which the present disclosure is implemented as a set will be described with reference to FIG. 28. FIG. 28 illustrates an example of a schematic configuration of a video set to which the present disclosure is applied.

As electronic apparatuses have gradually become multifunctional in recent years, when some configurations of each apparatus are prepared for sale, provision, and the like in the stage of development and manufacturing, there are not only cases in which such an apparatus is configured to have one function, but also many cases in which a plurality of configurations having relevant functions are combined and implemented as one set with the plurality of functions.

The video set 1300 illustrated in FIG. 28 is configured to be multifunctional as described above by combining devices having functions of encoding and decoding (which may have either or both of the functions) of images with devices having other functions relating to the foregoing functions.

As illustrated in FIG. 28, the video set 1300 has a module group including a video module 1311, an external memory 1312, a power management module 1313, a frontend module 1314 and the like, and devices having relevant functions such as connectivity 1321, a camera 1322, a sensor 1323, and the like.

A module is a form of a component in which several related componential functions are gathered to provide a cohesive function. A specific physical configuration is arbitrary; however, it is considered to be an integration in which, for example, a plurality of processors each having functions, electronic circuit elements such as a resistor and a capacitor, and other devices are disposed on a circuit board. In addition, making a new module by combining a module with another module, a processor, or the like is also considered.

In the example of FIG. 28, the video module 1311 is a combination of configurations with functions relating to image processing, and has an application processor, a video processor, a broadband modem 1333, and an RF module 1334.

A processor is a semiconductor chip integrated with a configuration having predetermined functions using System-On-Chip (SoC), and is also referred to as, for example, system large scale integration (LSI), or the like. The configuration having a predetermined function may be a logic circuit (hardware configuration), may be, along with CPU, a ROM, and a RAM, a program that is executed by using the elements (software configuration), or may be a combination of both configurations. For example, a processor may have a logic circuit, a CPU, a ROM, a RAM, and the like and may realize some functions with the logic circuit (hardware configuration), or may realize the other functions with a program executed by the CPU (software configuration).

The application processor 1331 of FIG. 28 is a processor that executes an application relating to image processing. The application executed by the application processor 1331 can not only perform an arithmetic process but can also control a configuration internal and external to the video module 1311, for example, the video processor 1332 when necessary in order to realize predetermined functions.

The video processor 1332 is a processor having a function relating to (one or both of) encoding and decoding of images.

The broadband modem 1333 is a processor (or a module) which performs a process relating to wired or wireless (or both) broadband communication performed through a broadband line such as the Internet or a public telephone line network. For example, the broadband modem 1333 converts data (a digital signal) to be transmitted into an analog signal by performing digital modulation or the like, or converts a received analog signal into data (a digital signal) by performing demodulation. For example, the broadband modem 1333 can digitally modulate/demodulate arbitrary information such as image data to be processed by the video processor 1332, a stream obtained by encoding image data, an application program, or setting data.

The RF module 1334 is a module which performs frequency conversion, modulation and demodulation, amplification, a filtering process, and the like on a radio frequency (RF) signal transmitted and received via an antenna. For example, the RF module 1334 generates an RF signal by performing frequency conversion and the like on a baseband signal generated by the broadband modem 1333. In addition, the RF module 1334, for example, generates a baseband signal by performing frequency conversion and the like on an RF signal received via the frontend module 1314.

Note that, as indicated by the dashed line 1341 in FIG. 28, the application processor 1331 and the video processor 1332 may be integrated to constitute one processor.

The external memory 1312 is a module that is provided outside the video module 1311, having a storage device used by the video module 1311. The storage device of the external memory 1312 may be realized with any physical configuration, but is generally used when large amounts of data such as image data in units of frames are stored, and thus it is desirable to realize the storage device with a relatively inexpensive and high-capacity semiconductor memory, for example, a dynamic random access memory (DRAM).

The power management module 1313 manages and controls power supply to the video module 1311 (each constituent element inside the video module 1311).

The frontend module 1314 is a module which provides the RF module 1334 with a frontend function (serving as a circuit of a transmitting and receiving end on an antenna side). The frontend module 1314 has, for example, an antenna unit 1351, a filter 1352, and an amplifying unit 1353 as illustrated in FIG. 20.

The antenna unit 1351 is configured with an antenna which transmits and receives wireless signals and peripherals thereof. The antenna unit 1351 transmits a signal supplied from the amplifying unit 1353 as a radio signal and supplies a received radio signal to the filter 1352 as an electric signal (RF signal). The filter 1352 performs a filtering process or the like on the RF signal received via the antenna unit 1351 and supplies the processed RF signal to the RF module 1334. The amplifying unit 1353 amplifies an RF signal supplied from the RF module 1334, and supplies the signal to the antenna unit 1351.

The connectivity 1321 is a module having a function relating to connection to the outside. A physical configuration of the connectivity 1321 is arbitrary. The connectivity 1321 has, for example, a configuration with a communication function other than that of a communication standard to which the broadband modem 1333 corresponds, an external input and output terminal, or the like.

For example, the connectivity 1321 may have a communicating function that is based on a wireless communication standard such as Bluetooth (a registered trademark), IEEE 802.11 (for example, Wireless Fidelity (Wi-Fi; a registered trademark), near field communication (NFC), or Infrared Data Association (IrDA), an antenna which transmits and receives signals based on the standard, or the like. In addition, the connectivity 1321 may have, for example, a module having a communicating function based on a wired communication standard such as Universal Serial Bus (USB), or High-Definition Multimedia Interface (HDMI; a registered trademark), or a terminal based on the standard. Furthermore, the connectivity 1321 may have, for example, another data (signal) transmitting function of an analog input and output terminal or the like.

Note that the connectivity 1321 may be set to include a device serving as a data (signal) transmission destination. For example, the connectivity 1321 may be set to have a drive (including a drive not only of a removable medium but also of a hard disk, a solid-state drive (SSD), a network-attached storage (NAS), or the like) which reads and writes data with respect to a recording medium such as a magnetic disk, an optical disc, a magneto-optical disc, or a semiconductor memory. In addition, the connectivity 1321 may be set to have an image or audio output device (a monitor, a speaker, or the like).

The camera 1322 is a module having a function of capturing a subject and obtaining image data of the subject. Image data obtained from capturing by the camera 1322 is, for example, supplied to and encoded by the video processor 1332.

The sensor 1323 is a module having arbitrary sensing functions of, for example, a sound sensor, an ultrasound sensor, a light sensor, an illuminance sensor, an infrared sensor, an image sensor, a rotation sensor, an angle sensor, an angular velocity sensor, a speed sensor, an acceleration sensor, an inclination sensor, a magnetic identification sensor, a shock sensor, a temperature sensor, and the like. Data detected by the sensor 1323 is, for example, supplied to the application processor 1331 and used by an application or the like.

The configurations described as modules above may be realized as processors, or conversely the configurations described as processors may be realized as modules.

In the video set 1300 with the configuration described above, the present disclosure can be applied to the video processor 1332 as will be described below. Thus, the video set 1300 can be implemented as a set to which the present disclosure is applied.

### (Example of a configuration of a video processor)

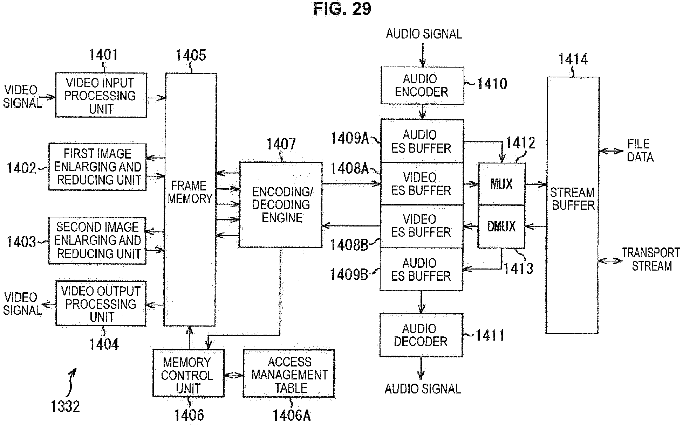

FIG. 29 illustrates an example of a schematic configuration of the video processor 1332 (of FIG. 28) to which the present disclosure is applied.

In the example of FIG. 29, the video processor 1332 has a function of receiving inputs of a video signal and an audio signal and encoding the signals in a predetermined scheme and a function of decoding encoded video data and audio data and outputting a video signal and an audio signal for reproduction.

As illustrated in FIG. 29, the video processor 1332 has a video input processing unit 1401, a first image enlarging and reducing unit 1402, a second image enlarging and reducing unit 1403, a video output processing unit 1404, a frame memory 1405, and a memory control unit 1406. In addition, the video processor 1332 has an encoding/decoding engine 1407, video elementary stream (ES) buffers 1408A and 1408B, and audio ES buffers 1409A and 1409B. Furthermore, the video processor 1332 has an audio encoder 1410, an audio decoder 1411, a multiplexer (MUX) 1412, a demultiplexer (DMUX) 1413, and a stream buffer 1414.

The video input processing unit 1401 acquires a video signal input from, for example, the connectivity 1321 (of FIG. 28), and converts the signal into digital image data. The first image enlarging and reducing unit 1402 performs format conversion, an image enlarging or reducing process or the like on image data. The second image enlarging and reducing unit 1403 performs an image enlarging or reducing process on the image data according to the format of a destination to which the data is output via the video output processing unit 1404, or performs format conversion, an image enlarging or reducing process or the like in the same manner as the first image enlarging and reducing unit 1402. The video output processing unit 1404 performs format conversion, conversion into an analog signal, or the like on image data, and outputs the data to, for example, the connectivity 1321 (of FIG. 28) as a reproduced video signal.

The frame memory 1405 is a memory for image data shared by the video input processing unit 1401, the first image enlarging and reducing unit 1402, the second image enlarging and reducing unit 1403, the video output processing unit 1404, and the encoding/decoding engine 1407. The frame memory 1405 is realized as a semiconductor memory, for example, a DRAM, or the like.

The memory control unit 1406 receives a synchronization signal from the encoding/decoding engine 1407 and controls access to the frame memory 1405 for writing and reading according to an access schedule to the frame memory 1405 which is written in an access management table 1406A. The access management table 1406A is updated by the memory control unit 1406 according to processes executed in the encoding/decoding engine 1407, the first image enlarging and reducing unit 1402, the second image enlarging and reducing unit 1403, and the like.

The encoding/decoding engine 1407 performs an encoding process of image data and a decoding process of a video stream that is data obtained by encoding image data. For example, the encoding/decoding engine 1407 encodes image data read from the frame memory 1405, and sequentially writes the data in the video ES buffer 1408A as video streams. In addition, for example, the encoding/decoding engine 1407 sequentially reads video streams from the video ES buffer 1408B, and sequentially writes the data in the frame memory 1405 as image data. The encoding/decoding engine 1407 uses the frame memory 1405 as a work area for such encoding and decoding. In addition, the encoding/decoding engine 1407 outputs a synchronization signal to the memory control unit 1406 at a timing at which, for example, a process on each micro block is started.

The video ES buffer 1408A buffers a video stream generated by the encoding/decoding engine 1407 and supplies the stream to the multiplexer (MUX) 1412. The video ES buffer 1408B buffers a video stream supplied from the demultiplexer (DMUX) 1413 and supplies the stream to the encoding/decoding engine 1407.

The audio ES buffer 1409A buffers an audio stream generated by an audio encoder 1410 and supplies the stream to the multiplexer (MUX) 1412. The audio ES buffer 1409B buffers an audio stream supplied from the demultiplexer (DMUX) 1413 and supplies the stream to an audio decoder 1411.

The audio encoder 1410, for example, digitally converts an audio signal input from, for example, the connectivity 1321 (of FIG. 28) or the like, and encodes the signal in a predetermined scheme, for example, an MPEG audio scheme, an AudioCode number 3 (AC3) scheme, or the like. The audio encoder 1410 sequentially writes audio streams that are data obtained by encoding audio signals in the audio ES buffer 1409A. The audio decoder 1411 decodes an audio stream supplied from the audio ES buffer 1409B, performs conversion into an analog signal, for example, and supplies the signal to, for example, the connectivity 1321 (of FIG. 28) or the like as a reproduced audio signal.

The multiplexer (MUX) 1412 multiplexes a video stream and an audio stream. A method for this multiplexing (i.e., a format of a bit stream generated from multiplexing) is arbitrary. In addition, during multiplexing, the multiplexer (MUX) 1412 can also add predetermined header information or the like to a bit stream. That is to say, the multiplexer (MUX) 1412 can convert the format of a stream through multiplexing. By multiplexing a video stream and an audio stream, for example, the multiplexer (MUX) 1412 converts the streams into a transport stream that is a bit stream of a format for transport. In addition, by multiplexing a video stream and an audio stream, for example, the multiplexer (MUX) 1412 converts the streams into data of a file format for recording (file data).

The demultiplexer (DMUX) 1413 demultiplexes a bit stream obtained by multiplexing a video stream and an audio stream using a method which corresponds to the multiplexing performed by the multiplexer (MUX) 1412. That is to say, the demultiplexer (DMUX) 1413 extracts a video stream and an audio stream from a bit stream read from the stream buffer 1414 (separates the bit stream into the video stream and the audio stream). The demultiplexer (DMUX) 1413 can convert the format of a stream through demultiplexing (inverse conversion to conversion by the multiplexer (MUX) 1412). For example, the demultiplexer (DMUX) 1413 can acquire a transport stream supplied from, for example, the connectivity 1321, the broadband modem 1333, or the like (all of which are in FIG. 28) via the stream buffer 1414, and convert the stream into a video stream and an audio stream through demultiplexing. In addition, for example, the demultiplexer (DMUX) 1413 can acquire file data read from various recording media by, for example, the connectivity 1321 (of FIG. 28) via the stream buffer 1414, and convert the data into a video stream and an audio stream through demultiplexing.

The stream buffer 1414 buffers bit streams. For example, the stream buffer 1414 buffers a transport stream supplied from the multiplexer (MUX) 1412, and supplies the stream to, for example, the connectivity 1321, the broadband modem 1333 (both of which are in FIG. 28), or the like at a predetermined timing or based on a request from outside or the like.

In addition, for example, the stream buffer 1414 buffers file data supplied from the multiplexer (MUX) 1412, and supplies the data to, for example, the connectivity 1321 (of FIG. 28) or the like at a predetermined timing or based on a request from outside or the like to cause the data to be recorded on any of various kinds of recording media.

Furthermore, the stream buffer 1414 buffers a transport stream acquired via, for example, the connectivity 1321, the broadband modem 1333 (both of which are in FIG. 28), or the like, and supplies the stream to the demultiplexer (DMUX) 1413 at a predetermined timing or based on a request from outside or the like.

In addition, the stream buffer 1414 buffers file data read from any of various kinds of recording media via, for example, the connectivity 1321 (of FIG. 28) or the like, and supplies the data to the demultiplexer (DMUX) 1413 at a predetermined timing or based on a request from outside or the like.

Next, an example of an operation of the video processor 1332 having this configuration will be described. For example, a video signal input to the video processor 1332 from the connectivity 1321 (of FIG. 28) or the like is converted into digital image data in a predetermined format such as a YCbCr format of 4:2:2 of in the video input processing unit 1401, and sequentially written in the frame memory 1405. This digital image data is read by the first image enlarging and reducing unit 1402 or the second image enlarging and reducing unit 1403, undergoes format conversion and an enlarging or reducing process in a predetermined format such as a YCbCr format of 4:2:0, and then is written in the frame memory 1405 again. This image data is encoded by the encoding/decoding engine 1407, and written in the video ES buffer 1408A as a video stream.

In addition, an audio signal input to the video processor 1332 from the connectivity 1321 (of FIG. 28) is encoded by the audio encoder 1410, and then written in the audio ES buffer 1409A as an audio stream.

The video stream of the video ES buffer 1408A and the audio stream of the audio ES buffer 1409A are read and multiplexed by the multiplexer (MUX) 1412 to be converted into a transport stream, file data, or the like. The transport stream generated by the multiplexer (MUX) 1412 is buffered in the stream buffer 1414, and then output to an external network via, for example, the connectivity 1321, the broadband modem 1333 (both of which are in FIG. 28), or the like. In addition, the file data generated by the multiplexer (MUX) 1412 is buffered in the stream buffer 1414, and output to, for example, the connectivity 1321 (of FIG. 28) to be recorded in any of various kinds of recording media.

In addition, a transport stream input to the video processor 1332 from an external network via, for example, the connectivity 1321, the broadband modem 1333 (both of which are in FIG. 28), or the like is buffered in the stream buffer 1414, and then demultiplexed by the demultiplexer (DMUX) 1413. In addition, for example, file data read from any of various kinds of recording media via the connectivity 1321 (of FIG. 28) and input to the video processor 1332 is buffered in the stream buffer 1414, and then demultiplexed by the demultiplexer (DMUX) 1413. That is to say, the transport stream or the file data input to the video processor 1332 is separated into a video stream and an audio stream by the demultiplexer (DMUX) 1413.

The audio stream is supplied to the audio decoder 1411 via the audio ES buffer 1409B to be decoded, and an audio signal is reproduced. In addition, the video stream is written in the video ES buffer 1408B, then sequentially read by the encoding/decoding engine 1407 to be decoded, and written in the frame memory 1405. The decoded image data undergoes an enlarging and reducing process by the second image enlarging and reducing unit 1403, and is written in the frame memory 1405. Then, the decoded image data is read by the video output processing unit 1404, undergoes format conversion in a predetermined format such as the YCbCr format of 4:2:2, and is further converted into an analog signal, and a video signal is reproduced to be output.

Note that the encoding/decoding engine 1407 of the present disclosure (i.e., the functions of the image encoding device and the image decoding device according to each embodiment described above) may be realized in the form of hardware such as a logic circuit, in the form of software such as an embedded program, or in both forms.

### <5. Conclusion>

In an embodiment of the present disclosure described above, an attribute for designating one or more URIs of definition information for remotely controlling the network camera 11 is added to the element "SegmentTemplate" disclosed in Non-Patent Literature 1. By adding the attribute to the element "SegmentTemplate," it is possible to dynamically designate a requested URL of a segment to the content reproduction device 20 serving as a client.

By enabling dynamic designation of the requested URL of the segment to the content reproduction device 20 serving as a client, the embodiment of the present disclosure can compress the MPD more than in the method proposed in Non-Patent Literature 2 described above. In addition, by enabling the definition information (parameter description) to be referred to from the MPD, the embodiment of the present disclosure can further reduce a burden of maintenance imposed when a schema of the MPD is separately expanded according to a condition of an application than in the method proposed in Non-Patent Literature 2 described above.

It is also possible to generate a computer program for exerting the functions equivalent to the above-described elements of the content server 10 and the content reproduction device 20 on hardware such as a central processing unit (CPU), a ROM, and a random-access memory (RAM) provided in the content server 10 and the content reproduction device 20. Moreover, a storage medium that stores the computer program is also provided.

The preferred embodiments of the present disclosure have been described above with reference to the accompanying drawings, whilst the present disclosure is not limited to the above examples, of course. A person skilled in the art may find various alterations and modifications within the scope of the appended claims, and it should be understood that they will naturally come under the technical scope of the present disclosure.

Additionally, the present technology may also be configured as below.
(1) An information processing device including:
   a storage unit configured to store a predetermined definition for adding a parameter to access information for accessing each of a plurality of subsegments constituting each piece of encoded data obtained by encoding same content at a different bit rate, or for accessing every element to be acquired through a request to a server described in an MPD; and
   a communication unit configured to access an address defined in the access information by designating a parameter based on the predetermined definition stored in the storage unit,
   wherein the address defined in the access information is an address for controlling a device which images the content.
(2) A content requesting method including:
   storing a predetermined definition for adding a parameter to access information for accessing each of a plurality of subsegments constituting each piece of encoded data obtained by encoding same content at a different bit rate, or for accessing every element to be acquired through a request to a server described in an MPD; and
   designating a parameter based on the predetermined definition stored in the storage unit and accessing an address defined in the access information,
   wherein the address defined in the access information is an address for controlling a device which images the content.
(3) A computer program causing a computer to execute:
   storing a predetermined definition for adding a parameter to access information for accessing each of a plurality of subsegments constituting each piece of encoded data obtained by encoding same content at a different bit rate, or for accessing every element to be acquired through a request to a server described in an MPD; and
   designating a parameter based on the predetermined definition stored in the storage unit and accessing an address defined in the access information,
   wherein the address defined in the access information is an address for controlling a device which images the content.

### Reference Signs List

- 10, 13: content server
- 11: network camera
- 12: network
- 20: content reproduction device
- 120: file generation unit
- 122: encoder
- 130: storage unit
- 140: communication unit
- 220: communication unit
- 230: storage unit
- 240: reproduction unit
- 250: selection unit

## Claims

**1.** An information processing device (20) comprising circuitry configured to:
store definition information representing a URL of a Media Presentation Description, MPD;
store definition information for adding a parameter to the URL of the MPD;
send the definition information to a client device in response to a request from the client device to reproduce content, the URL of the MPD sent to the client device including the stored parameter for adding to the URL of the MPD, wherein the parameter for adding to the URL of the MPD includes an attribute to access each of a plurality of subsegments constituting each piece of encoded data obtained by encoding the requested content at a different bit rate;
receive a URL to which the URL parameter based on the definition information is added by the client device; and
transmit the subsegment based on the received URL with the URL parameter added by client device.

**2.** The information processing device according to claim 1, wherein the MPD is received from a content server via HTTP.

**3.** An information processing device according to claim 1 or 2, wherein in response to sending a MPD without the attribute, the circuitry is further configured to
generate the MPD with the added attribute based on the request of the client device; and
send the MPD generated to the client device.

**4.** An information processing device according to claim 1, wherein the subsegment is sent from a content server via HTTP.

**6.** The information processing apparatus according to claim 1 or 3, wherein the attribute is stored in an Adaptation Set of the MPD

**7.** The information processing apparatus according to claim 1 or 3, wherein the attribute is stored in an EssentialProperty of AdaptationSet
